(19) **Europäisches Patentamt**

**European Patent Office**

**Office européen des brevets**

(11) **EP 1 043 658 B1**

(12) **FASCICULE DE BREVET EUROPEEN**

(45) Date de publication et mention
de la délivrance du brevet:
**05.07.2006 Bulletin 2006/27**

(51) Int Cl.:
***G06F 9/46*** (2006.01)

(21) Numéro de dépôt: **00400849.6**

(22) Date de dépôt: **28.03.2000**

(54) **Procédé d'amélioration des performances d'un système multiprocesseur comprenant une file d'attente de travaux et architecture de système pour la mise en oeuvre du procédé**

Verfahren zur Verbesserung der Leistung eines Multiprozessorsystems mit einer Aufgabenwarteschlange und Systemarchitektur zu deren Betrieb

Method for improving the performance of a multiprocessor system including a tasks waiting list and system architecture thereof

(84) Etats contractants désignés:
**DE FR GB**

(30) Priorité: **07.04.1999 FR 9904337**

(43) Date de publication de la demande:
**11.10.2000 Bulletin 2000/41**

(73) Titulaire: **BULL S.A.**
**78430 Louveciennes (FR)**

(72) Inventeur: **Rogier, Pierre**
**38410 Vaulnaveys le Haut (FR)**

(74) Mandataire: **Debay, Yves**
**Cabinet Debay,**
**126 Elysée 2**
**78170 La Celle Saint Cloud (FR)**

(56) Documents cités:
**EP-A- 0 750 255          FR-A- 2 740 579**
**US-A- 5 459 864**

- **BENMOHAMMED-MAHIEDDINE K ET AL: "A PERIODIC SYMMETRICALLY-INITIATED LOAD BALANCING ALGORITHM FOR DISTRIBUTED SYSTEMS" OPERATING SYSTEMS REVIEW (SIGOPS),US,ACM HEADQUARTER. NEW YORK, vol. 28, no. 1, janvier 1994 (1994-01), page 66-79 XP000418067**

**Description**

L'invention concerne un procédé d'amélioration des performances d'un système informatique de traitement de données multiprocesseur comprenant une file d'attente de travaux et commandé par un système d'exploitation de type préemptif.

L'invention concerne plus particulièrement un procédé d'affectation optimisée des tâches à un processeur dans un tel système multiprocesseur, de manière à obtenir ladite amélioration des performances.

L'invention concerne encore une architecture informatique de traitement de données de système pour la mise en oeuvre de ce procédé.

L'invention s'applique plus particulièrement aux systèmes multiprocesseurs symétriques classiques, du type dit "SMP" selon la terminologie anglo-saxonne. Cependant, elle s'applique également à des systèmes multiprocesseurs du type à architecture de mémoire à accès non uniforme, connus sous la dénomination anglo-saxonne "NUMA" (pour "Non Uniform Memory Architecture").

L'invention s'applique plus particulièrement encore à un environnement de système d'exploitation de type "UNIX" (marque déposée). Mais on doit bien comprendre que le procédé de l'invention s'applique aussi à d'autres systèmes d'exploitation du type préemptif. Cependant, pour fixer les idées, et sans limiter en quoique ce soit la portée de l'invention, on se placera dans ce qui suit dans le cas de l'environnement "UNIX" et dans le cadre de l'architecture de type "NUMA" précitée, sauf indication contraire.

Dans le cadre de l'invention, les termes "tâche" ou "travail" doivent être considérés dans leur acceptation la plus générale, les termes usuellement utilisés étant d'ailleurs susceptibles de varier selon l'environnement associé au système. A titre d'exemples non limitatifs, dans le cadre de l'environnement "UNIX" précité, on parle de "thread" ou de "process", selon la terminologie anglo-saxonne généralement utilisée. Un système en environnement "UNIX" comprend des mémoires virtuelles. Le terme "process" désigne généralement un ensemble tâches (dénommé "threads") qui partagent un même espace de mémoire virtuelle.

Par contres deux "threads" appartenant à des "process" différents s'exécutent dans un espace de mémoire virtuelle distinct (généralement disjoints). Ci-après, on appellera tâche un "thread" et processus un "process" multitâche.

L'une des fonctions essentielle d'un système d'exploitation préemptif est d'accorder du temps processeur à chacune des différentes tâches s'exécutant en parallèle sur le système.

Dans l'art connu, une solution classique pour résoudre ce problème consiste à stocker dans une file d'attente les tâches qui doivent être exécutées et chaque processeur puise dans cette file d'attente pour exécuter une tâche, jusqu'à ce qu'un événement prédéterminé signale au processeur en question qu'il doit exécuter une autre tâche. Le processeur émet alors une requête qui est transmise à un organe distributeur, plus communément appelé "dispatcher", selon la terminologie anglo-saxonne.

Cette solution présente l'avantage de s'assurer qu'un processeur n'est inactif que si la file d'attente est vide, c'est à dire qu'il n'y a réellement aucune tâche qui puisse être exécutée.

En contrepartie, cette solution présente plusieurs inconvénients, et notamment les suivants :

- quand le nombre de processeurs et le nombre de tâches à traiter augmentent, la contention sur des organes appelés verrous, c'est-à-dire des organes protégeant l'accès a la file d'attente précitée, augmente dans des proportions importantes ;
- et des caches dits de "niveau 2" sont quelquefois associés à chaque processeur : il est alors intéressant qu'une tâche s'exécute de préférence sur un seul et même processeur pour bénéficier des informations stockées dans le cache de "niveau 2" qui lui est associé.

La solution de type classique précitée est incapable de gérer naturellement un tel fonctionnement. Aussi, il est également connu de faire appel à des algorithmes complémentaires qui permettent ce mode de fonctionnement.

On peut citer notamment le brevet EP 0 750 255, qui décrit un système d'accès non uniforme à la mémoire d'un système multi processuel.

Ce système a une architecture en arbre hiérarchique pour maintenir un niveau d'affinité le plus efficace possible et pour maintenir le processeur équilibré et la mémoire chargée. Cette structure hiérarchique comprend plusieurs niveaux. Un niveau 0 qui comprend 8 noeuds chacun des 8 noeuds correspondant à une des 8 tâches individuelles. Le niveau 1 contient 4 noeuds, chaque noeud correspond à une ressource de la mémoire et ses tâches de rang inférieur. Le niveau 2 contient 2 noeuds chacun correspondant à 2 noeuds du niveau 1 et une ressource partagée. Et un niveau 3 simple, avec 1 noeud correspondant à 2 noeuds du niveau 2 et au moins une ressource partagée.

Cependant, ces algorithmes ne sont pas non plus sans inconvénients. Ils sont eux-mêmes de plus en plus coûteux, en terme de dégradation des performances globales du système, au fur et à mesure que le nombre de tâches et/ou le nombre de processeurs augmentent.

L'invention vise à pallier les inconvénients des procédés et dispositifs de l'art connu, et dont certains viennent d'être rappelés.

L'invention se fixe pour but un procédé permettant l'amélioration du mécanisme d'affectation des tâches à un processeur dans un système multiprocesseur, à système d'exploitation du type préemptif.

Pour ce faire, selon une première caractéristique importante, dans un premier mode de réalisation, le procédé selon l'invention comprend des étapes consistant à réaliser une partition de la file d'attente de travaux unique précitée en un nombre prédéterminé de files d'attente que l'on qualifiera d'élémentaires, à affecter chacun des travaux à effectuer à l'une des files d'attente élémentaires, à répartir les processeurs du système en groupes de processeurs, le nombre de groupes de processeurs étant égal au nombre de files d'attente, et d'affecter chacun des groupes de processeurs à l'une des files d'attente élémentaires.

Cette disposition permet notamment de limiter le nombre de processeurs accédant aux verrous et donc de limiter le phénomène de contention.

Cependant, l'expérience montre que, lorsque le nombre de tâches et le nombre de processeurs augmentent, la disposition précitée ne permet plus d'améliorer les performances du système.

Ceci est dû à plusieurs phénomènes et notamment aux suivants :

Dans un système d'exploitation moderne existent deux types de tâches : les tâches à priorité variable et les tâches à priorité fixe. Les tâches du premier type sont des tâches dont la priorité varie en fonction du temps de processeur consommé (la politique d'ordonnancement est définie par le système d'exploitation lui-même). Les tâches du second type sont des tâches dont la politique d'ordonnancement est fixée lors de la définition de la tâche par le programmeur.

En premier lieu, la gestion des tâches de priorité fixe dans un système comportant plusieurs files d'attente, selon une première caractéristique du premier mode de l'invention, peut devenir complexe, car il est nécessaire d'éviter qu'une première tâche de priorité plus élevée soit exécutée après une seconde tâche de priorité moins élevée. Cette gestion s'avère en effet difficile, et surtout coûteuse en temps, lorsque les deux tâches précitées sont dans deux files d'attente distinctes. On conçoit aisément que cette difficulté augmente rapidement avec le nombre de tâches qui se répartissent dans un grand nombre de files d'attente.

Le problème subsiste pour des tâches de priorité variable, mais la difficulté de mise en oeuvre est moindre car c'est le système d'exploitation lui-même qui fixe les priorités, et il peut se permettre de violer ses propres règles.

En second lieu, le traitement des tâches peut devenir déséquilibré. Les tâches étant, *a priori,* de natures hétérogènes, le temps nécessaire au traitement de celles-ci peut varier dans de fortes proportions d'une tâche à l'autre. Il s'ensuit que un ou plusieurs processeurs, ou groupes de processeurs, peuvent se trouver en sous-charge, voire devenir inactifs, faute de tâches à traiter (les files d'attente associées s'étant vidées), alors qu'un ou plusieurs autres processeurs, ou groupes de processeurs, continuent de traiter des tâches (voire être surchargés) et qu'il reste des tâches à exécuter dans les files d'attente associées à ceux-ci.

Aussi, dans un second mode de réalisation préféré de l'invention, tout en conservant les dispositions propres au premier mode de réalisation (partition des files d'attente), on procède à un rééquilibrage du traitement des tâches, selon plusieurs variantes.

Selon une première variante, le rééquilibrage comprend une répartition optimisée des tâches entre les différentes files d'attente du système. Le mode de répartition tient compte de différents paramètres qui seront précisés dans ce qui suit. La répartition peut être effectuée, soit lors de la création de la tâche, soit lors de l'association réalisée entre la tâche et un fichier contenant le programme à exécuter.

A titre d'exemple, dans un environnement de type "UNIX" précité, cette association est réalisée par une instruction de type : "*exec()*". Cette seconde option est préférable lorsque le système multiprocesseur est du type "NUMA' précité.

Cette disposition améliore les performances du système, y compris lorsque le nombre de tâches à traiter est très élevé. Cependant, la courbe représentant les performances présente des oscillations, qui traduisent des instabilités, notamment lorsque le nombre de tâches devient élevé. En outre, il est encore possible d'améliorer les performances.

Selon une deuxième variante de réalisation du second mode, lorsque la file d'attente associée à un processeur, ou à un groupe de processeurs, devient vide et que le processeur ou au moins l'un des processeurs n'a plus de tâche en cours de traitement, le processeur recherche dans les autres files d'attente s'il existe des tâches en attente de traitement. Si cette recherche est positive, dans un mode préféré, le processeur recherche ce qu'on pourra appeler la "meilleure tâche à traiter", s'il existe plusieurs tâches en attente. Le mode de recherche et de sélection de cette tâche sera précisé dans ce qui suit.

On doit bien comprendre que dans ces deux variantes, l'affectation des différentes tâches aux différentes files d'attente reste inchangée. L'association des première et deuxième variantes précitées est particulièrement efficace pour l'amélioration des performances du système tant que de nouvelles tâches se créent en permanence. Par contre, lorsque cet état cesse, par exemple en fin de travail du système, on peut être amené à constater de nouveau des déséquilibres de charge.

Aussi, l'invention peut comprendre une troisième variante de réalisation, dans laquelle on réaffecte des tâches entre différentes files d'attente, de façon périodique par exemple.

Cette disposition n'a généralement que peu d'effet en régime normal (création continue de tâches) sur les performances d'un système multiprocesseur symétrique, c'est-à-dire du type "SMP" précité. Elle peut cependant s'avérer utile pour un système de type "NUMA" précité.

L'invention a donc pour objet un procédé d'affectation de tâches dans un système de traitement de données numériques multiprocesseur, à système d'exploitation préemptif, comprenant un nombre déterminé de processeurs susceptibles de traiter lesdites tâches en parallèle, caractérisé en ce qu'il comprend au moins une phase préliminaire pendant laquelle lesdits processeurs sont répartis en groupes, chaque groupe comprenant des nombres prédéterminés de processeurs, en ce qu'il est associé à chacun desdits groupes de processeurs une file d'attente élémentaire, enregistrant un nombre prédéterminé de tâches à traiter selon un ordre de priorité déterminé et en ce que chacune des tâches de chacune desdites files d'attente est associée à l'un des processeurs associé à cette file d'attente élémentaire.

L'invention a encore pour objet une architecture de système multiprocesseur pour la mise en oeuvre de ce procédé.

L'invention va maintenant être décrite de façon plus détaillée en se référant aux dessins annexés, parmi lesquels :

- la figure 1 illustre schématiquement la répartition de tâches entre les processeurs dans une architecture de système multiprocesseur selon l'art connu ;
- la figure 2 illustre un exemple d'architecture comportant plusieurs files d'attente, selon un premier mode de réalisation du procédé de l'invention ;
- la figure 3 illustre schématiquement un exemple d'architecture de système multiprocesseur du type dit "NUMA" ;
- la figure 4 illustre de façon plus détaillée l'architecture de la figure 2 dans le cas d'un système multiprocesseur de type "NUMA" conforme à la figure 3 ;
- la figure 5A est un organigramme explicatif du procédé de l'invention selon une première variante d'un second mode de réalisation du procédé de l'invention et la figure 5B illustre schématiquement une architecture de mise en oeuvre de cette variante ;
- la figure 6B est un organigramme explicatif du procédé de l'invention selon une deuxième variante du second mode de réalisation du procédé de l'invention et la figure 6A illustre schématiquement une architecture de mise en oeuvre de cette variante ;
- la figure 7 illustre schématiquement une architecture de mise en oeuvre d'une troisième variante du second mode de réalisation du procédé de l'invention ; et
- la figure 8 est une courbe permettant de comparer les performances obtenues par les dispositions propres à ces trois variantes de réalisation par rapport à l'art connu.

Dans ce qui suit, sans en limiter en quoi que ce soit la portée, on se placera dans un environnement de système d'exploitation de type "UNIX". Les tâches seront donc, comme il a été indiqué, constituées par des "threads".

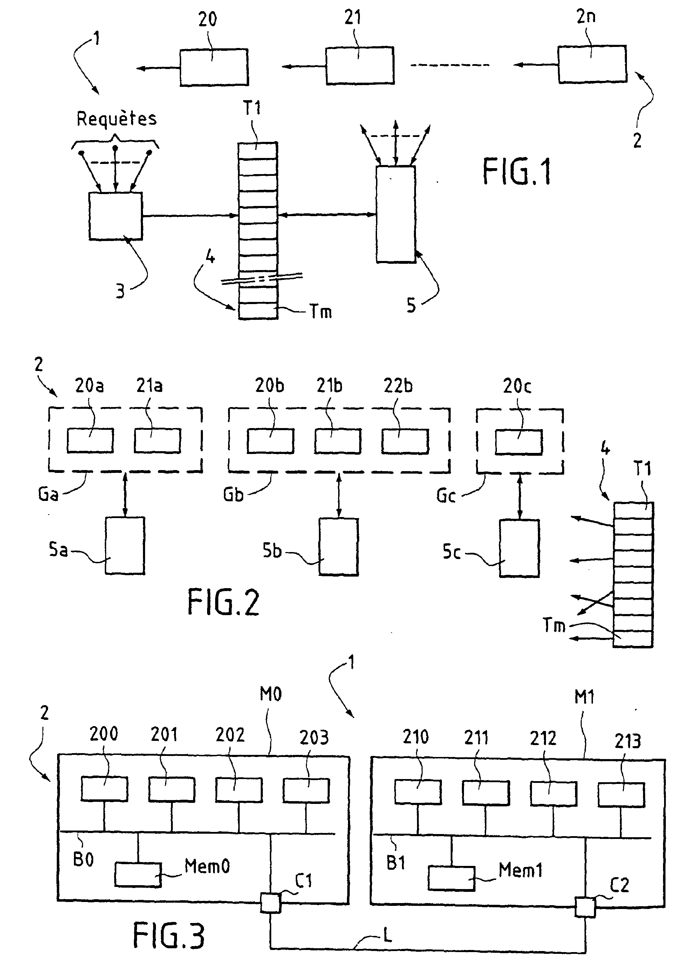

La figure 1 illustre schématiquement une architecture de système multiprocesseur et les principaux dispositifs mis en oeuvre dans le mécanisme de répartition des tâches selon l'art connu.

On n'a représenté sur la figure 1 que les éléments nécessaires à la bonne compréhension de ce mécanisme. On a supposé que le système multiprocesseur 1 comprenait un ensemble 2 de $n$ processeurs, référencés 20 à 2n.

Dans l'environnement précité, on prévoit une table 4 enregistrant la liste de toutes les tâches à traiter, soit $m$ tâches $T_1$ à $T_m$ dans l'exemple décrit, un organe de distribution des tâches 3, ou "dispatcher" selon la terminologie anglo-saxonne, et une file d'attente unique 5, ou "run queue" selon la terminologie anglo-saxonne, constituée par une liste de tâches rangées selon un ordre de priorité préétabli. Il s'agit généralement d'une structure de type "premier entré -premier sorti" ou "FIFO", selon la terminologie anglo-saxonne.

De façon générale, un ensemble "file d'attente" (ci-après appelé ensemble de file d'attente) est constitué d'une série d'objets et de méthodes nécessaires pour traiter la file d'attente. Il comprend :

- le processeur appartenant à l'ensemble de file d'attente et représenté par une structure de données qui sur le système où a été réalisé l'invention, est appelée *"ppda"* (pour " Per-Processor Data Area") ;
- les tâches appartenant à l'ensemble de file d'attente, chaque tâche étant représentée par une structure de tâche ;
- la structure de la file d'attente ;
- les méthodes permettant d'ajouter ou de retirer des tâches de la file d'attente ; et
- les méthodes pour initialiser la file d'attente.

Un processeur se réfère à la structure de la file d'attente par un pointeur adressant la structure de données *"ppda structure"* précitée. Une tâche se réfère à la structure de tâche par un pointeur. La structure de file d'attente comprend usuellement un certain nombre de données ou informations relatives au distributeur (verrou, table de priorité, liste des processeurs, etc.).

Une tâche peut se trouver dans deux états principaux : un premier état dit "exécutable", dans lequel elle est susceptible d'être effectivement traitée et un second état dit "dormant", c'est-à-dire d'attente d'un événement la faisant passer au premier état. Quand une tâche passe d'un état à l'autre, le noyau du système d'exploitation ou "kernel", selon la terminologie anglo-saxonne, utilise le pointeur de file d'attente pour ajouter ou enlever la tâche en question de la liste des tâches exécutables dans la structure de file d'attente. La tâche de plus haute priorité est exécutée par l'un ou l'autre des processeurs, 20 à 2n, qui a émis une requête de traitement ($n$ étant le nombre total de processeurs du système 1).

Un mécanisme dit "de verrou" est utilisé dans un certain nombre de circonstances, pour éviter un accès concurrent à une tâche, et notamment lorsqu'une tâche est ajoutée ou retirée de la file d'attente 5, ou lorsqu'elle change d'état.

On conçoit aisément que ce mécanisme de verrou global soit générateur de contentions lorsqu'il est fréquemment utilisé et n'autorise qu'une faible scalabilité. Cet inconvénient est amplifié lorsque le système multiprocesseur est du type "NUMA" précité.

Aussi, selon une caractéristique importante de l'invention, dans un premier mode de réalisation, on prévoit une partition de la file d'attente unique, et des verrous qui lui sont associés, en plusieurs ensembles de file d'attente et de verrous. La figure 2 illustre schématiquement un exemple d'architecture de ce type. Le système 1 comprend, comme précédemment, plusieurs processeurs. Cependant, ces processeurs ont été rassemblés en groupes de processeurs, par exemple trois groupes référencés $G_a$ à $G_c$. Chaque groupe, $G_a$ à $G_c$, peut comprendre un nombre identique ou non de processeurs. Sur la figure 2, à titre d'exemple, on a supposé arbitrairement que le groupe $G_a$ comprenait deux processeurs, $20_a$ et $21_a$, le groupe $G_b$, trois processeurs, $20_b$ à $22_b$, et le groupe $G_c$, un seul processeur, $20_c$.

En outre, selon une première caractéristique importante de l'invention, la file d'attente unique (figure 1 : 5) est désormais divisée en une pluralité de files d'attente. De façon plus précise encore, le nombre de files d'attente est égal au nombre de groupes de processeurs, soit trois files d'attente dans l'exemple de la figure 2 : $5_a$ à $5_c$, chaque file d'attente étant associée à l'un des groupes de processeurs, $G_a$ à $G_c$.

En outre, et selon un autre aspect important, chaque tâche, $T_1$ à $T_m$, est affectée à une file d'attente particulière, $5_a$ à $5_c$, et à une seule.

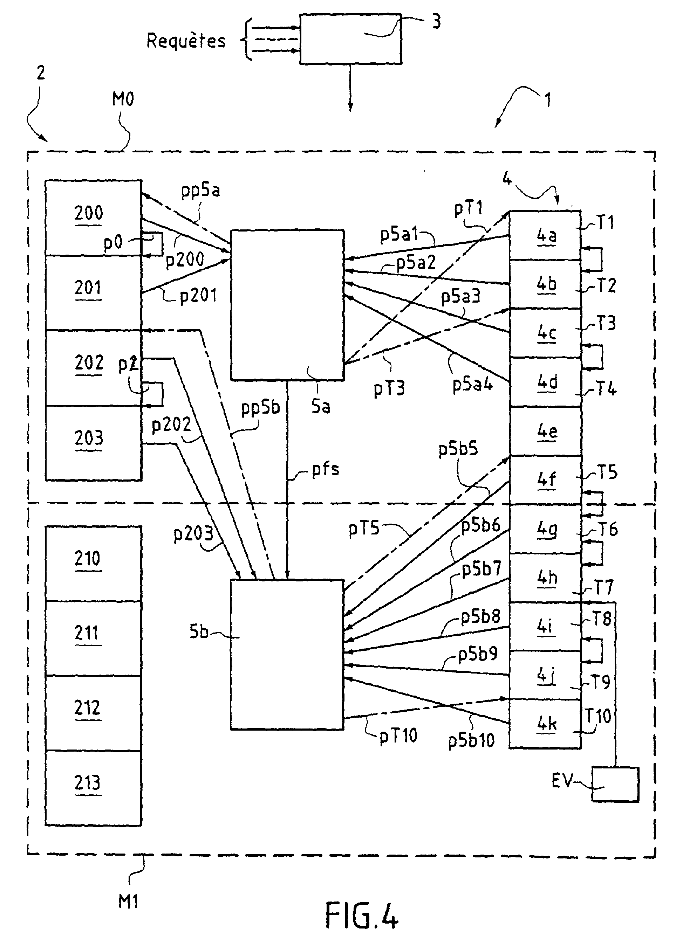

Ces affectations et associations s'effectuent, comme il le sera montré ci-après, en regard de la figure 4, à l'aide de jeux de pointeurs.

Le choix du nombre de groupes de processeurs, et donc du nombre de files élémentaires, dépend de nombreux paramètres dans un système multiprocesseur de caractéristiques données. Généralement, cette répartition ne peut pas être obtenue par des calculs préalables, mais par l'expérimentation et la mesure.

Le but que ce fixe l'invention est d'augmenter les performances globales du système par le biais d'une meilleure répartition des tâches entre processeurs individuels. Aussi, les expérimentations et tests précités consisteront, dans une phase initiale, à définir des programmes de test et de référence, dits "benchmark" selon la terminologie anglo-saxonne, et de les faire exécuter par le système. La répartition des processeurs en groupes associés à des files d'attente élémentaires donnant les meilleurs résultats, d'un point de vue performances, est retenue à ce stade. La configuration obtenue est généralement "gelée" et utilisée pour les systèmes de même structure fabriqués par la suite.

Il est d'ailleurs à présumer que, *a priori,* les meilleures performances devraient être atteintes en associant une file d'attente à chacun des processeurs. En d'autres termes, chaque groupe serait réduit à un seul processeur. Mais cette répartition peut engendrer des difficultés de réalisation. Aussi, un compromis est généralement préféré.

On va maintenant décrire de façon plus détaillée ce premier mode de réalisation du procédé de répartition des tâches selon l'invention.

Cependant, comme il a été indiqué, les architectures des systèmes multiprocesseurs du type "NUMA" accentuant les problèmes, on va se placer dans ce cadre et rappeler brièvement les caractéristiques principales d'une telle architecture par référence à la figure 3.

Le système 1 est divisé en modules, par exemple en deux modules, $M_0$ et $M_1$ comme représenté sur la figure 3 (ce nombre pouvant être quelconque). Chaque module, $M_0$ et $M_1$, comprend un nombre quelconque de processeurs pouvant fonctionner en parallèle. De façon pratique, le nombre de processeurs est limité à quelques unités, typiquement à quatre : 200 à 203 et 210 à 213, respectivement. En effet, lorsque le nombre de processeurs en parallèle augmente, les performances du système global augmentent tout d'abord sensiblement linéairement, puis la courbe s'infléchit. Le nombre quatre précité représente en général une valeur optimale. Les processeurs de chaque module, $M_0$ et $M_1$, sont connectés à des bus internes aux modules, $B_0$ et $B_1$ respectivement, et chaque module comprend notamment une mémoire centrale, $Mem_0$ et $Mem_1$. Les modules, $M_0$ et $M_1$, et leurs mémoires associées, $Mem_0$ et $Mem_1$, forment chacun un sous-système de type "SMP" précité. Les modules, $M_0$ et $M_1$, sont reliés entre eux par un lien $L$ et un système de caches, $C_1$ et $_{C2,}$ qui constituent un prolongement des bus internes précités.

On conçoit aisément que, par exemple, la lecture ou l'écriture d'une donnée de ou dans une mémoire externe à un module, par un processeur de ce module, se traduise par une dégradation des performances du système, par rapport à la même opération entièrement exécutée à l'intérieur d'un même module. Les performances sont également dégradées lorsque les données doivent transiter d'un module à l'autre par le lien qui ne peut généralement pas fonctionner à la même vitesse qu'un bus interne.

Aussi, on a proposé des procédés permettant d'obvier tout ou partie des problèmes spécifiques posés par les architectures de type "NUMA", procédés qui sortent du cadre précis de l'invention.

Cependant, le procédé de l'invention, dans son premier mode de réalisation, puisqu'il permet de limiter les contentions, du fait de la partition des files d'attente et des verrous associés, trouve une application particulièrement avantageusement pour ce type d'architecture.

La figure 4 illustre de façon plus détaillée un exemple d'architecture de type "NUMA" dans laquelle est mis en oeuvre le procédé de l'invention. On n'a représenté que les éléments strictement nécessaires à la bonne compréhension de l'invention. Les éléments communs aux figures précédentes portent les mêmes références et ne seront re-décrits qu'en tant que de besoin. Comme précédemment, on a supposé que le système multiprocesseur 1 ne comprenait que deux modules, $M_0$ et $M_1$, chacun comprenant le même nombre de processeurs, soit quatre processeurs : 200 à 203 et 210 à 213, respectivement. Le nombre de modules peut naturellement être quelconque.

Dans le cadre d'une architecture "NUMA", il existe une partition naturelle des processeurs du système 1 en groupes, en l'occurrence une répartition en modules (deux modules dans l'exemple de la figure 4 : $M_0$ et $M_1$). On pourrait donc associer une file d'attente à chaque module. Cependant cette configuration n'est pas obligatoire.

Sur la figure 4, à titre d'exemple, on a représenté une configuration différente. Bien que l'on ait prévu deux files d'attente, $5_a$ et $5_b$, une par module $M_0$ et $M_1$, on a associé les processeurs 200 et 201, du module $M_0$, à la file d'attente $5_a$ et les processeurs 202 et 203, du module $M_0$ à la file d'attente $5_b$. Le fonctionnement des processeurs 210 à 213 du module $M_1$ n'est pas décrit ci-après. Ces processeurs pourraient être associés aussi, par exemple, à la file d'attente $5_b$.

Le système 1 comprend également, comme précédemment, une table des tâches à exécuter 4 et un distributeur de tâches 3 recevant des requêtes émises par les processeurs 2. De façon plus précise, pour fixer les idées, on a supposé que la table 4 avait onze positions, référencées $4_a$ à $4_k$. Chaque position est destinée à enregistrer une tâche élémentaire. Certaines positions peuvent être vides à un instant donné, comme la position $4_e$ dans l'exemple de la figure 4, de sorte qu'il existe seulement dix tâches en attente d'exécution, $T_1$ à $T_{10}$. Les tâches $T_1$ à $T_4$ sont enregistrées dans les positions $4_a$ à $4_d$ de la table 4, et les tâches $T_5$ à $T_{10}$ sont enregistrées dans les positions $4_f$ à $4_k$. Comme il a été indiqué, certaines tâches peuvent être "dormantes". Sur la figure 4, à titre d'exemple, on a représenté deux tâches "dormantes" $T_8$ à $T_9$, enregistrées dans les positions $4_i$ et $4_j$, respectivement. Ces deux dernières tâches sont dites "ancrées", car en attente de l'apparition d'un événement référencé $EV$ sur la figure 4, événement qui les fera passer à l'état "exécutable".

Comme il a été indiqué, chaque processeur est associé à une structure de donnée *"ppda"* qui l'identifie. Ces structures de données comprennent au moins deux séries de pointeurs.

La première série de pointeurs (représentés en trait plein) associe à chaque processeur une file d'attente. Dans l'exemple de la figure 4, les pointeurs référencés $p_{200}$ et $p_{201}$ associent la file d'attente $5_a$ aux processeurs 200 et 201, et les pointeurs référencés $p_{202}$ et $p_{203}$ associent la file d'attente $5_b$ aux processeurs 202 et 203.

La seconde série de pointeurs (représentée en trait plein) lie entre eux la cascade de processeurs associés à une même file d'attente. Ces pointeurs pourraient être dénommés *"prochain processeur dans la file d'attente"*. Le pointeur référencé $p_0$ indique que le prochain processeur lié à la file d'attente $5_a$, après le processeur 200, est le processeur 201. Le pointeur référencé $p_2$ indique H que le prochain processeur lié à la file d'attente $5_b$, après le processeur 202, est le processeur 203.

De façon analogue, les structures de données associées aux files d'attente comprennent plusieurs séries de descripteurs, constitués par des pointeurs.

Une première série de pointeurs (représentés en trait mixte), $pp_{5a}$ et $pp_{5b}$, associe chaque file d'attente, $5_a$ et $5_b$, à un groupe de processeurs, plus précisément au premier processeur de ce groupe, identifié par sa structure de données *"ppda"*. Dans l'exemple de la figure 4, le pointeur $pp_{5a}$ associe la file d'attente $5_a$ au processeur 200. Le pointeur $pp_{5b}$ associe la file d'attente $5_b$ au processeur 202.

Il existe une deuxième série de pointeurs, dans l'exemple un seul référencé *pfs* (représenté en trait plein), pointant sur la file d'attente suivante, en l'occurrence la file d'attente $5_b$.

Il existe enfin une troisième série de pointeurs (représentés en trait mixte), $pT_1$, $pT_3$, $pT_5$ et $pT_{10}$, chacun pointant sur une des tâches de la table 4, plus précisément sur la première tâche d'une cascade ordonnée de tâches, comme il le sera montré ci-après. Dans l'exemple de la figure 4, $pT_1$ et $pT_3$ associent à la file d'attente $5_a$ les tâches $T_1$ et $T_3$, respectivement, et $pT_5$ et $pT_{10}$ associent à la file d'attente $5_b$ les tâches $T_5$ et $T_{10}$, respectivement.

Dans la table 4, les tâches sont ordonnées par ordre de priorité. La structure de description de chaque tâche comprend au moins trois séries de données constituées par des pointeurs. Pour chaque tâche, le pointeur de la première série permet de connaître la tâche précédente et le pointeur de la deuxième série, la tâche suivante. Ces pointeurs (représentés en trait plein) n'ont pas été expressément référencés et sont symbolisés, sur la figure 4, par des doubles flèches.

Selon un aspect important du procédé de l'invention, chaque tâche, y compris les tâches dites "dormantes" sont associées à une des files d'attente, $5_a$ ou $5_b$, dans l'exemple de la figure 4. Cette association est réalisée grâce à une troisième série de pointeurs (représentés en trait plein), référencés $p5a_1$ à $p5a_4$, et $p5b_5$ à $p5b_{10}$, respectivement. Les pointeurs $p5a_1$ à $p5a_4$ associent les tâches respectives $T_1$ à $T_4$, à la file d'attente $5_a$, et les pointeurs $p5b_5$ à $p5b_{10}$ associent les tâches respectives $T_5$ à $T_{10}$ à la file d'attente $5_b$.

Dans l'exemple précis décrit sur la figure 4, il existe deux "paquets" distincts de tâches liées en cascade pour chacune des files d'attentes, respectivement $5_a$ et $5_b$ : $T_1$-$T_2$ et $T_3$-$T_4$ pour la file d'attente $5_a$, et $T_5$ à $T_7$ et $T_{10}$, pour la file d'attente $5_b$. Les tâches $T_8$ et $T_9$ sont liées entre elles, mais sont à l'état "dormant". Il n'existe pas de pointeur associant ces tâches à la file $5_b$ dans cet état.

Comme il a été rappelé, il existe des tâches à priorité fixe et des tâches à priorité variable. Pour les tâches du premier type, il est obligatoire que l'ordre des priorités soit respecté, les tâches de plus fortes priorités devant être traitées avant les autres. Pour ce faire, on peut réserver une file d'attente aux tâches à priorité fixe. Toutefois, cette disposition n'est pas toujours envisageable. C'est le cas par exemple lorsqu'un processus comprend des tâches liées à un processeur donné. La tâche doit alors résider dans la file d'attente associée à ce processeur ou au groupe auquel il appartient. L'ordre des priorités est traité à l'intérieur de cette file d'attente.

En résumé de ce qui vient d'être décrit, le procédé selon l'invention, dans le premier mode de réalisation qui consiste à démultiplier les files d'attente, à affecter chaque file d'attente à un groupe de processeurs et à affecter chaque tâche à une file d'attente permet bien d'améliorer les performances globales du système. En effet les contentions sont réduites, car les verrous sont également distribués.

En outre, le procédé permet, dans une architecture de type "NUMA" d'implanter un mécanisme dit de "Weak Affinity", selon la terminologie anglo-saxonne. Un tel mécanisme favorise l'exécution d'une tâche sur un processeur d'un module unique, ce qui permet de tirer un plus grand bénéfice de la mémoire cache dite de "niveau 3" associée au module. Or, puisqu'il est possible d'associer une file d'attente à des processeurs appartenant à un seul module, le distributeur peut aisément confiner les tâches d'un processus dans un seul module.

Le procédé selon le premier mode de réalisation trouve cependant des limites lorsque le nombre de tâches et de groupes de processeurs augmentent fortement. En effet, lors de la création "physique" d'une tâche celle-ci doit être affectée à l'une des files d'attente du système, en faisant usage d'un mécanisme de distribution donné. Jusqu'à présent, il a été supposé implicitement que la distribution des tâches était réalisée sur une base d'équi-répartition temporelle entre les différentes files d'attente, dans la mesure où elles ne sont pas pleines. Pour ce faire, on peut utiliser un algorithme bien connu du type "round robin", c'est-à-dire à tour de rôle. Une telle méthode n'est pas sans inconvénients. En effet, dans les conditions précitées, les tâches présentant des caractéristiques non homogènes, notamment en ce qui concerne le temps de traitement nécessaire, il peut arriver qu'une ou plusieurs files d'attente soient vides ou peu chargées, et donc que les processeurs des groupes qui leur sont associés soient en sous-charge, voire inactifs pour le moins jusqu'à l'apparition de nouvelles tâches et à leur affectation à ces files d'attente. En sens inverse, une ou plusieurs autres files d'attente peuvent présenter des surcharges importantes. Il apparaît donc un phénomène de déséquilibre de charges, qui a d'autant plus de chance de se produire que le nombre de files d'attente et le nombre de tâches à traiter sont élevés. L'augmentation escomptée des performances globales du système est alors contrebalancée par ce phénomène parasite. Dans certains cas particulièrement défavorables, au-dessus d'un seuil donné de charge de travail, seuil qui dépend des ressources propres à un système particulier, il arrive de constater que les dispositions du procédé de l'invention sont contre-productives, en ce sens que les performances du système sont moins bonnes que celles d'un système de l'art connu présentant les mêmes ressources informatiques.

Aussi, selon un second mode de réalisation, mode de réalisation préféré, susceptible de plusieurs variantes, on adopte des dispositions supplémentaires permettant un (ré-)équilibrage de la charge entre les différentes files d'attentes, ou pour le moins un traitement optimisé des tâches réparties dans les files d'attente, de manière à ce que les processeurs soient utilisés de façon optimisée.

On doit bien comprendre cependant que, selon ce second mode de réalisation, dans toutes ses variantes, les dispositions propres au premier mode sont conservées. Notamment, on répartit les processeurs en groupes (qui peuvent coïncider avec une répartition en modules dans un système d'architecture de type "NUMA") et on prévoit plusieurs files d'attente, une par groupe de processeurs.

Les opérations nécessaires pour obtenir cette configuration à files d'attente multiples, généralement effectuées une fois pour toutes, constituent donc une phase que l'on pourra qualifier de préliminaire. En mode opérationnel, un (ré)équilibrage des tâches entre files d'attente ou de la charge de travail entre processeurs va être obtenu selon trois mécanismes, constituant précisément trois variantes du second mode de réalisation. Il doit d'ailleurs être noté que ces trois mécanismes peuvent coexister et ne sont pas exclusifs l'un de l'autre. Tout au contraire, dans un mode de réalisation préféré, on cumulera ces trois mécanismes, pour le moins les deux premiers qui donnent les meilleurs résultats quant aux objectifs poursuivis par l'invention, comme il le sera précisé ci-après.

Selon la première variante de réalisation, un équilibrage des tâches est obtenu en les répartissant de façon optimisée entre les différentes files d'attente lorsqu'elles apparaissent "physiquement", et non plus simplement à tour de rôle ("round robin" précité). La façon précise de choisir une file d'attente va être précisée ci-après.

Selon la deuxième variante de réalisation, un rééquilibrage du traitement des tâches est obtenu en optimisant l'utilisation effective des processeurs. Lorsqu'un processeur détecte que la file d'attente qui lui est associée est vide et qu'il n'a plus de tâche en cours de traitement, il va chercher une tâche à traiter dans une autre file d'attente, dite éloignée, en effectuant un balayage des autres files d'attente du système, jusqu'à ce qu'il trouve une file d'attente non vide et dont la charge est supérieure, *a priori,* à un seuil déterminé. Le choix d'une tâche précise dans la file d'attente sélectionnée, s'effectue selon un processus qui va être détaillé ci-après. De façon pratique, c'est le "dispatcher" qui va piloter ces opérations et attribuer la tâche choisie, selon des critères préétablis, au processeur demandeur. On peut qualifier ce processus de *"vol de temps de traitement processeur"* (la ressource informatique que constitue ce processeur est en effet réaffectée provisoirement à une file d'attente éloignée qui lui ne lui est pas associée) ou encore *"d'aide à d'autres composants du système".*

Dans les deux variantes ci-dessus, une tâche donnée, même si elle est mise en relation avec un processeur étranger à sa file d'attente, reste associée à celle-ci: Lorsque le processeur précité a terminé son traitement, la tâche est remise dans sa file d'attente initiale (et non pas dans celle du processeur ayant effectué le traitement).

Dans la troisième variante par contre, lorsqu'un déséquilibre est détecté au niveau global du système, des files d'attente sont rééquilibrées. Pour ce faire, on réaffecte des tâches en les déplaçant physiquement d'une file d'attente à une autre. Ce rééquilibrage peut s'effectuer sur une base régulière, par exemple toutes les secondes, sous la commande d'un organe appelé ordonnanceur ou "scheduler" selon la terminologie anglo-saxonne, organe que l'on trouve classiquement dans les systèmes informatiques. De façon pratique, dans cette troisième variante, on ne rééquilibre pas systématiquement toutes les files d'attentes. On utilise également des seuils qui sont déterminés de la façon détaillée ci-après.

Ces trois variantes du second mode de réalisation, notamment les deux premières, permettent d'augmenter les performances du système, même lorsque le nombre de tâches et le nombre de groupes de processeurs (et donc de files d'attente) sont élevés.

On va maintenant détailler et préciser les trois variantes du second mode de réalisation.

Selon la première variante de réalisation, lors de la création d'une tâche à exécuter, celle-ci va être aiguillée vers une des files d'attente du système, de façon à optimiser la charge globale du système.

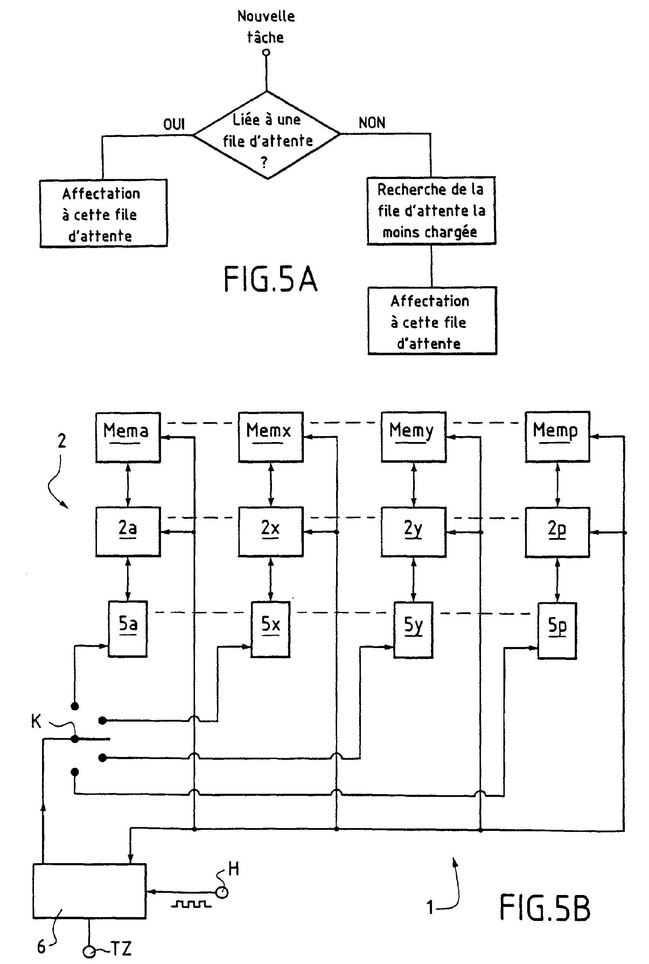

L'organigramme de la figure 5A illustre les principales étapes du processus. Lors d'une première étape, il est déterminé si une nouvelle tâche est liée à une file d'attente prédéterminée, c'est-à-dire si elle doit être traitée dans un processeur, ou un groupe de processeurs, associé à cette file d'attente. Si le test est positif (branche "OUI"), la tâche est aiguillée sur cette file d'attente particulière $5_x$ par exemple (figure 5B). Si le test est négatif (branche "NON"), le processus de recherche de sélection proprement dite d'une file d'attente est initialisé. Il s'agit de la file d'attente la moins chargée du système 1, par exemple la file d'attente 5y (figure 5B).

La recherche de cette file d'attente 5y est effectuée par un organe 6, qui peut être logique ou matériel, comme illustré schématiquement par la figure 5B.

On a supposé, que le système 1 comprend au total p files d'attente : $5_a$, ..., $5_x$, ..., $5_y$, ...., $5_p$, associées chacune à (au moins) un processeur : $2_a$, ..., $2_x$, ..., $2_y$, ..., $2_p$. Les processeurs sont associés chacun à une mémoire $Mem_a$, ..., $Mem_x$, ..., $Mem_y$, ..., $Mem_p$. L'organe 6 scrute la charge des files d'attente : $5_a$, ..., $5_x$, ..., $5_y$, ..., $5_p$.

Plusieurs procédés peuvent être mis en oeuvre pour déterminer la charge d'un ensemble de file d'attente particulier. De façon avantageuse, dans cette variante de réalisation du procédé de l'invention, la charge d'une file d'attente est déterminée en tenant compte à la fois de l'utilisation du processeur associé à la file et de l'utilisation de la mémoire associée à ce processeur. On parle donc d'une charge composite qui obéit à la relation suivante :

$$Charge\_composite_{\#y} = charge\_CPU_{\#y} + charge\_Mem_{\#y} \qquad (1),$$

relation dans laquelle $CPU_{\#y}$ est le processeur ou le groupe de processeurs associé à la file d'attente $\#y$ et $Mem_{\#y}$ la mémoire associée aux processeurs.

Le premier terme peut lui-même être calculé à partir de la multiplication des paramètres suivants : le coefficient de charge du processeur, que l'on appellera *coef_charge_CPU$_{\#y}$,* le nombre de tâches en cours d'exécution, que l'on appellera *nb_tâche$_{\#y}$,* et un paramètre représentatif de la charge moyenne du processeur par tâche, que l'on appellera *moyenne_charge_CPU$_{\#y}$* par tâche.

De même, en ce qui concerne le second terme, le calcul est effectué à partir de trois paramètres similaires : *coef_charge_Mem$_{\#y}$, nb_tâche$\#_y$* et *moyenne_charge_Mem$_{\#y}$ par_tâche.*

Les paramètres *coef_charge_CPU$_{\#y}$* et *coef_charge_Mem$_{\#y}$* sont des constantes pondérées et *moyenne_charge_CPU$_{\#y}$ par_tâche* et *moyenne_charge_Mem$_{\#y}$ par_tâche* sont des variables calculées pour chaque ensemble de file d'attente.

Il s'ensuit que la relation (1) peut être réécrite de la façon suivante :

$$Charge\_composite_{\#y} = nb\_tâche_{\#y} * charge\_FA_{\#y} \qquad (2),$$

relation dans laquelle $charge\_FA_{\#y}$ est une donnée variable stockée dans la structure de file d'attente et déterminée par l'ordonnanceur ("scheduler"), par exemple toutes les secondes, ou par tout autre organe ou processus activé régulièrement. Cet organe peut être l'organe 6, si celui-ci reçoit des signaux d'horloge H appropriés. La charge est aussi calculée à chaque fois qu'une instruction d'exécution est initiée.

La variable $charge\_FA_{\#y}$ est une variable composite comprenant des constantes ($coef\_charge\_CPU_{\#y}$ et $coef\_charge\_Mem_{\#y}$) qui peuvent être stockées dans une variable globale et sont susceptible d'être ajustée ("tunable") par l'administrateur du système pour obtenir un résultat optimum. Les autres composantes de la variable $charge\_FA_{\#y}$ sont déterminées elles-mêmes à partir de plusieurs paramètres décrivant le système, notamment à partir du nombre de tâches exécutables, de statistiques tenues à jour par le "scheduler" concernant les files d'attente et de l'occupation des mémoires, etc. Ces statistiques, pour la plupart, sont généralement disponibles dans les systèmes informatiques modernes et sont utilisées à d'autres fins que celles propres à l'invention. Le surcoût dû aux dispositions propres à l'invention, en terme de temps de calcul supplémentaire, est donc négligeable.

En ce qui concerne plus particulièrement les calculs permettant de déterminer la charge d'une mémoire, il peut être fait appel à des méthodes bien connues mettant en oeuvre des algorithmes d'estimation linéaire ou non linéaire

Lors de la création d'une nouvelle tâche $T_z$, et une fois que la file d'attente la moins chargée a été trouvée par l'organe 6, par exemple la file d'attente 5y, la nouvelle tâche $T_z$ est aiguillée vers cette file d'attente par l'organe 6. Cet aiguillage a été symbolisé, sur la figure 5B, par un simple commutateur K.

Ces dispositions présentent de nombreux avantages, notamment les suivants :

a/ elles permettent de répondre très rapidement à des modifications également rapides du comportement du système 1 ;
b/ la détermination de la charge composite est simple, car basée sur deux valeurs qui peuvent être recherchées dans une même ligne de la mémoire cache de "niveau 2" ;
c/ le mécanisme n'est pas figé : il pourrait inclure d'autres variables, par exemple l'équilibrage de la charge de circuits d'entrées-sorties ("I/O") ;
d/ le déséquilibre dans des modules matériels est automatiquement pris en charge (c'est-à-dire le nombre de processeurs et/ou la taille mémoire) : en effet le nombre de processeurs est pris en compte du fait que le paramètre $moyenne\_charge\_Mem_{\#y}$ $par\_tâche$ est relatif à une charge par processeur et la taille mémoire est prise en compte du fait que le nombre de pages mémoire (ou d'entités similaires) dépend de la taille mémoire ; et
e/ le mécanisme s'adapte de lui-même au jeu de ressources : s'il existe plusieurs files d'attente partageant un même pool de mémoire, la charge de la mémoire est la même pour tous les modules et seule la charge des processeurs est significative.

L'expérience montre que les dispositions propres à cette première variante du second mode permettent d'améliorer les performances globales du système, même en présence d'un grand nombre de files d'attente et de tâches à exécuter.

Cependant, on peut constater dans certaines circonstances l'apparition d'instabilités. Par exemple, si l'on trace une courbe représentant le nombre de tâches exécutées par unité de temps (par exemple par heure) en fonction du nombre d'utilisateurs du système, ces instabilités se traduisent par des oscillations de la courbe.

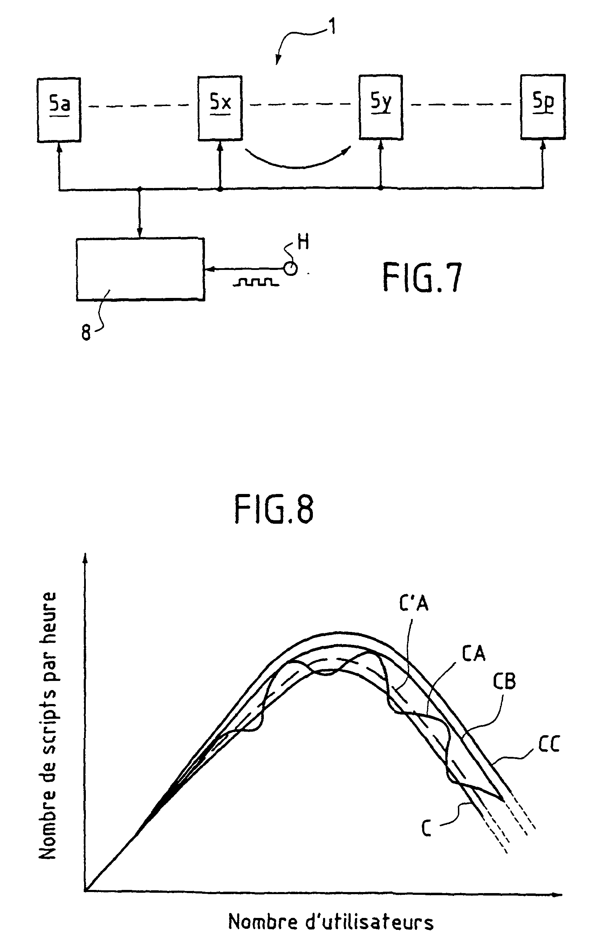

On a représenté sur la figure 8 l'allure de la courbe représentant l'évolution du nombre de tâches exécutées par heure (chaque tâche étant représentée par exemple par un script) en fonction du nombre d'utilisateurs du système. La courbe C représente l'allure des performances d'un système non modifié, c'est-à-dire un système de l'art connu. La courbe $C_A$ illustre le fonctionnement d'un système comportant les même ressources informatiques, mais dans lequel les dispositions propres à la première variante du second mode de réalisation du procédé de l'invention ont été implantées. On constate que la courbe $C_A$ est (dans sa plus grande partie) située au-dessus de la courbe C, ce qui signifie que les performances ont été améliorées. Mais la courbe $C_A$ présente des oscillations autour d'une position moyenne (représentée par une interpolation en traits interrompus $C'_A$). On constate aussi, dans l'exemple de la figure 8, que certaines oscillations font passer la courbe $C_A$ en dessous de la courbe C. Pour ces portions de courbe, le système est moins performant qu'un système équivalent de l'art connu.

Aussi, il est préférentiellement fait appel à la deuxième variante de réalisation du second mode du procédé selon l'invention, dont les dispositions spécifiques peuvent se cumuler avec celles de la première variante.

Conformément à cette deuxième variante du second mode de réalisation du procédé selon l'invention, lorsqu'un processeur constate que la file d'attente qui lui est associée est vide et qu'il devient inactif, il va chercher une autre tâche exécutable dans une liste d'attente éloignée, non vide, ou pour le moins dont le taux de charge est supérieur à un seuil déterminé. Cependant, la tâche sélectionnée ne peut être quelconque. Elle doit répondre à certains critères qui vont être précisés ci-après.

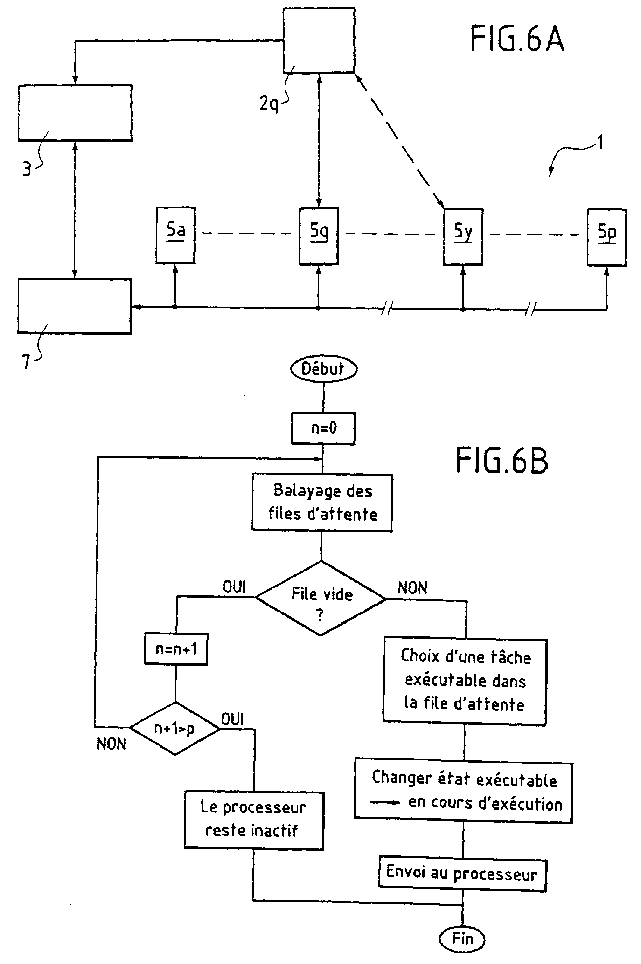

La figure 6A illustre schématiquement un mode de recherche possible d'une tâche dans les files d'attentes du système 1. Les éléments communs aux figures précédentes portent les mêmes références et ne seront re-décrits qu'en tant que de besoin.

De façon habituelle, comme il a été montré en regard de la figure 4, les processeurs émettent des requêtes reçues par le "dispatcher" 3. On suppose ici que la file d'attente $5_q$ du processeur $2_q$ est vide et que celui-ci devient inactif. Le "dispatcher" 3 reçoit une requête de traitement en provenance de ce processeur $2_q$. Selon la deuxième variante du second mode de réalisation du procédé, on prévoit un organe 7, qui peut être matériel ou logique, qui est chargé de balayer l'état des différentes files d'attente du système 1, soit au total $p$ files d'attentes : $5_a$, ..., $5_q$, ..., $5_y$, ..., $5_q$.

Le processus de recherche d'une tâche exécutable comprend plusieurs étapes résumées schématiquement par le diagramme de la figure 6B. La première étape consiste en un balayage des files d'attente une par une (on commence, par exemple à la file de rang arbitraire $n = 0$). Pour chaque file d'attente, un test est réalisé pour savoir si la file est vide ou non. Si la file est vide, le balayage est de nouveau ré-exécuté, après incrémentation du numéro de la file d'attente : $n = n+1$ et vérification qu'il reste des files d'attente à scruter (test : $n+1 > p$). Lorsque le test est positif, cela signifie qu'il n'y a pas de file d'attente vide, et le balayage se termine. Le processeur reste alors inactif jusqu'à l'arrivé d'un événement (top d'horloge, mise en attente d'une tache dans la file d'attente).

Lorsque l'organe 7 trouve une file d'attente non vide, par exemple la file d'attente $5_y$ (figure 6B), il effectue une étape de sélection d'une des tâches présentes dans la file d'attente, en respectant des critères qui vont être précisés.

De même, le choix de la file d'attente peut être effectué, non sur le simple fait qu'elle soit vide, mais de préférence sur un critère de seuil d'occupation minimal donné, comme il va l'être montré également.

Le procédé conforme à cette deuxième variante présente trois difficultés qui sont les suivantes :

a/ la détermination d'un critère précis pour décider qu'un processeur $2_q$ doit "aider" une file d'attente éloignée $5_y$ ;
b/ la gestion du mécanisme de verrou associé à la file d'attente $5_y$ ; et
c/ la sélection d'une tâche précise dans cette file d'attente $5_y$.

En ce qui concerne la décision "d'aide", l'exécution d'une tâche affectée à une file d'attente éloignée ne doit pas perturber le fonctionnement des mémoires caches du système et dégrader les performances globales de ce système, ce qui irait à l'encontre du but que ce fixe l'invention. En conséquence, le mécanisme de ré-affectation de tâches ne peut pas être mis oeuvre systématiquement, du moins sans précautions particulières.

Il est nécessaire que certains critères soient satisfaits, et parmi lesquels :

a/ le taux de charge moyen du processeur devrait être inférieur à un seuil déterminé, pour fixer les idées typiquement 50 % ;
b/ le taux de charge moyen par processeur de l'ensemble de file d'attente "aidée" devrait être supérieur à un seuil déterminé, pour fixer les idées typiquement égal à 110 % ; et
c/ la charge instantanée processeur de l'ensemble de file d'attente "aidée" devrait être supérieur à un seuil déterminé.

Ces critères doivent donc être pris en compte dans le processus de sélection d'une file d'attente et d'une tâche précise de cette file d'attente.

En outre, il est à noter que certains événements peuvent faire avorter l'opération de ré-affectation :

/ des tâches locales nécessitent d'être exécutés ;
2/ le verrou de la file d'attente sélectionné ne peut être acquis ;
3/ la tâche sélectionnée n'est plus exécutable lorsque le verrou est acquis ; et
4/ aucune tâche exécutable ne peut être trouvée.

Les paramètres charge moyenne et charge instantanée peuvent être calculés par l'organe 7.

En ce qui concerne la gestion d'un verrou critique, il y a lieu de remarquer que son maintien doit être le plus court possible, même si le processus de recherche d'une tâche est moins performant d'un point de vue du processeur local. Le verrou d'une file d'attente est plus critique que le verrou d'une tâche de cette file d'attente.

Il s'ensuit que le processus comprend avantageusement les étapes suivantes :

- déplacement dans la file d'attente non verrouillée, en vue de la sélection d'une tâche exécutable ;
- verrouillage de la tâche sélectionnée dans cette file d'attente ;
- verrouillage de la file d'attente "aidée", en prenant soin de prévoir un délai maximum ("time-out"), de manière à éviter un blocage permanent ("dead-lock") ;

- test pour déterminer si la tâche est toujours à l'état exécutable ;
- extraction de cette tâche de la file d'attente ;
- déverrouillage de la file d'attente ; et
- distribution de la tâche, de façon habituelle.

En ce qui concerne le choix d'une tâche, un grand nombre de facteurs doivent être pris en compte, et parmi lesquels les suivants :

/ l'affinité avec un processeur, c'est-à-dire le fait que la dernière distribution de la tâche s'est effectuée sur ce processeur ;
2/ l'affinité avec un module, dans le cas d'une architecture de type "NUMA",
c'est-à-dire le fait que la dernière distribution de la tâche s'est effectuée sur ce module ;
3/ la priorité affectée à une tâche ;
4/ la localisation de la tâche ;
5/ le fait que la tâche ait déjà été "aidée" ;
6/ le fait que le processus soit mono-tâche ;
7/ la quantité de mémoire accédée par la tâche ;
8/ l'utilisation du processeur ; et
9/ la durée de vie de la tâche.

En ce qui concerne le facteur 3/ (priorité), il est préférable de "sauter" les tâche de plus haute priorité, c'est-à-dire les premières tâches dans la file d'attente "aidée". En effet, la probabilité est grande qu'elles soient prises en charge par un processeur local, du fait précisément de la haute priorité qui leur est associée, avant qu'elle puisse être traitée par le processeur éloigné. L'utilisation d'un seuil prédéterminé semble être une solution appropriée pour cette partie du processus. En outre, les tâches de plus faibles priorité sont généralement, en moyenne statistique, des tâches qui utilisent le plus le processeur.

La détermination d'une valeur de seuil est importante. En effet, si la valeur de seuil est trop basse, c'est-à-dire que le nombre de tâches sautées est trop faible, le mécanisme d'aide se trouve alors souvent en conflit avec le mécanisme standard de distribution des tâches, c'est-à-dire le mécanisme commun à l'art connu. En sens contraire, si le seuil est fixé à une valeur trop haute, aucune tâche ne pourra être trouvée et le mécanisme d'aide s'avère complètement inefficace.

De façon préférentielle, pour être aussi indépendant que faire ce peut de la charge de travail, on met en oeuvre un procédé auto-adaptatif, par exemple le suivant :

Le nombre de tâches sautées est fixé à une valeur comprise entre le nombre de processeurs et le nombre de tâches exécutables dans l'ensemble de file d'attente. Cette valeur est incrémentée d'une unité chaque fois que la tâche choisie pour être "aidée" est, soit déjà verrouillée, soit n'est pas à l'état exécutable. Cette valeur est décrémentée d'une unité chaque fois qu'aucune tâche n'est trouvée, lorsque le nombre maximum de tâches à balayer est supérieur à la moitié du nombre de tâches exécutables.

Le nombre maximum de tâches à balayer est fixé à une valeur comprise entre l'unité et le nombre de tâches exécutables dans l'ensemble de file d'attente. Cette valeur est incrémentée d'une unité chaque fois qu'aucune tâche n'est trouvée ou chaque fois que la tâche choisie se trouve dans le dernier quart des tâches balayées (tâches de plus basses priorités). Cette valeur est décrémentée d'une unité chaque fois que la tâche choisie se trouve dans le premier quart des tâches balayées (tâches de plus hautes priorités).

Le facteur 4/ (localisation) est, *a priori,* un facteur très important. Cependant, ce facteur est généralement difficile à déterminer, bien que, dans un environnement de type "UNIX", la localisation de la tâche soit connue par segment de mémoire.

En ce qui concerne le facteur 5/, on peut généralement admettre que, si une tâche a déjà été "aidée", elle peut déjà résider dans plusieurs modules. Il s'ensuit que de la déplacer ailleurs ne constitue pas une opération coûteuse en terme de dégradation de performances.

En ce qui concerne le facteur 7/; il s'agit également d'un facteur important, mais qui ne peut être déterminé aisément. Deux critères permettent d'arriver à une approximation raisonnable :

a/ la taille mémoire utilisée par le processus ; et
b/ "l'interactivité" de la tâche, ce critère étant défini par le fait qu'une tâche soit souvent "dormante" ou non.

Le critère b/ peut être obtenu à partir d'un comptage du nombre de fois où elle est à l'état "dormant", ce qui peut se dériver de statistiques généralement disponibles.

En ce qui concerne enfin le facteur 9/, il est aisé de comprendre qu'il n'est pas utile de tenter de prendre en charge les tâches de faible durée de vie. En effet, la plupart d'entre elles disparaissent à court terme.

En tenant compte de tout ou partie de ces différents facteurs, il est possible de déterminer quelle tâche doit être sélectionnée dans une file d'attente, en définissant un coût individuel associé à chaque facteur, et d'en déduire un coût global associé à une tâche particulière. On peut, pour ce faire construire une table à deux entrées : facteurs - coûts. La tâche présentant le coût global le plus faible est sélectionnée, c'est-à-dire celle causant la dégradation minimale des performances du système. Les calculs nécessaires à cette détermination et à celle du seuil précité pour sauter un nombre prédéterminé de tâches peuvent être effectués par l'organe 7, seul ou en coopération avec d'autres composants du système.

Si on se reporte de nouveau à la figure 8, on obtient la courbe $C_B$ qui reste toujours au-dessus de la courbe $C$ et ne présente plus d'oscillations. La deuxième variante du second mode de réalisation du procédé permet donc d'améliorer les performances globales du système.

Cependant, les première et deuxième variantes permettent une augmentation effective des performances globales du système tant que de nouvelles tâches se créent. Lorsque le processus de création de tâches décroît fortement, on constate de nouveau l'apparition d'un déséquilibre des charges des files d'attentes. C'est le cas, par exemple, en fin de travail de travail du système.

Aussi, on peut mettre en oeuvre une troisième variante du second mode de réalisation du procédé selon l'invention.

Dans les deux premières variantes, les associations "tâches - files d'attente" restent invariables. Selon cette troisième variante de réalisation, cumulable avec les deux autres, on réaffecte physiquement les tâches en les déplaçant entre files d'attente.

La figure 7 illustre schématiquement cette troisième variante. On prévoit un organe 8, matériel ou logique, chargé de déterminé si le système est déséquilibré, en ce qui concerne les charges des files d'attente, $5_a$, ... , $5_x$, ..., $5_y$, ... , $5_p$. le mécanisme est déclenché périodiquement, par exemple toutes les secondes par le "scheduler" ou tout autre dispositif fournissant des signaux d'horloge $H$.

Lorsqu'un déséquilibre est constaté par l'organe 8, les tâches des files d'attente, $5_a$, ... , $5_x$ ..., $5_y$, ... , $5_p$, vont être redistribuées pour essayer de trouver un nouvel équilibre.

De façon pratique, et préférentiellement, seules les tâches appartenant à la file d'attente la plus chargée, arbitrairement $5_x$, vont être déplacées. En outre, toujours de façon préférentielle, on considère également un seuil de déséquilibre prédéterminé, en dessous duquel aucun rééquilibrage n'est effectué.

Toujours de façon préférentielle, on déplace, non des tâches individuelles, mais toutes les tâches appartenant à un même processus. En effet, en moyenne statistique, les tâches appartenant à un même processus ont toutes les chances de coopérer entre elles. Il est donc approprié de les déplacer globalement.

Enfin, pour minimiser le coût du rééquilibrage, on mesure la charge de travail présentée par les processus multitâches et la taille mémoire nécessaire. C'est le processus qui présente la plus forte charge de travail et nécessite le minimum de taille mémoire qui est déplacé vers la file d'attente la moins chargée.

De façon plus précise, les principales étapes de cette troisième variante sont les suivantes :

1/ détermination du vecteur de charge composite pour chaque ensemble de file d'attente, soit $\overrightarrow{CL}$ ;

2/ détermination du vecteur de charge composite moyenne, soit $\overrightarrow{ACL}$ ;

3/ détermination des vecteurs de déséquilibre pour chaque ensemble de file d'attente i, soit $\overrightarrow{AD_i}$ ;

4/ détermination de la file d'attente ayant le plus fort vecteurs de déséquilibre, soit $\left\|\overrightarrow{AD_i}\right\|$ ;

5/ détermination du nombre moyen de tâches pouvant être migrées, soit $ANT$ ; et
5/ détermination de la taille d'une sphère de processus pouvant être migrés, soit $SSMP$.

Pour fixer les idées, la valeur de $SSMP$ peut être déterminée comme suit :

a/ si $ANT = 1$, alors $SSMP = \left\|\overrightarrow{AD_i}\right\|/2$ ; et

b/ si $ANT > 1$, alors $SSMP = \left\|\overrightarrow{AD_i}\right\| * 1,1 * (ANT-1)/ANT$

c/ si la valeur de $SSMP$ est inférieure à un seuil prédéterminé, l'opération de rééquilibrage est abandonnée : le système est considéré ne pas être déséquilibré.

Pour chaque processus, on exécute les étapes suivantes :

- test de la possibilité de migration : en d'autres termes, on teste si le processus appartient à l'ensemble de file d'attente le plus chargé, si toutes les tâches qui le composent appartiennent à ce même ensemble et si aucune tâche n'est liée à un module particulier (de façon plus générale à un des groupes de processeurs) ;
- détermination de son vecteur charge composite, soit ;

- si $\left\|\overrightarrow{CLP} - \overrightarrow{AD}\right\| < SSMP$, détermination du coût de la migration ;

- mémorisation du processus dans une liste des processus *ANT* à migrer, ces processus étant classés en fonction décroissante du rapport $\left(\left\|\overrightarrow{CLP} - \overrightarrow{AD}\right\| / co\hat{u}t\right)$ ;

- nouvelle détermination de la charge composite (en fonction du temps écoulé, celle-ci ayant pu changé depuis la première détermination) et du déséquilibre de l'ensemble de file d'attente ; et
- pour chaque processus de la liste des processus pouvant être migrés :

    - si $\left\|\overrightarrow{CLP} - \overrightarrow{AD}\right\| < \left\|\overrightarrow{AD}\right\|$ trouver la file d'attente d'indice arbitraire *y* pour laquelle le paramètre $\left\|\overrightarrow{CLP} - \overrightarrow{AD}\right\|$ est minimal ;
    - migrer ce processus vers l'ensemble de file d'attente le moins chargé $5_y$ ; et

    - mettre à jour le facteur représentatif du déséquilibre des deux ensembles de file d'attente, soit

$$\overrightarrow{AD}_x = \overrightarrow{AD}_x - \overrightarrow{CLP}_x \text{ et } \overrightarrow{AD}_y = \overrightarrow{AD}_y - \overrightarrow{CLP}_y.$$

Le vecteur de charge composite est un vecteur à trois dimensions. En effet, il dépend des paramètres suivants :

- charge du processeur ;
- charge de la mémoire ; et
- priorité.

Les deux premiers paramètres dépendent à leur tour de la configuration matérielle et logicielle précise du système considéré : nombre de processeurs, taille de la mémoire, nombre de pages mémoire libres, etc. La détermination de ces paramètres est commune à l'art connu et obtenue par des calculs classiques, biens connus de l'homme de métier. Le paramètre "priorité" est obtenu à partir de la moyenne des priorités attachées aux différentes tâches.

Théoriquement, la détermination de la charge d'un ensemble de file d'attente est donnée par la somme des charges de processus. Mais pour accélérer cette détermination, on la dérive directement à partir de statistiques généralement stockées dans la structure de données de cet ensemble. La charge dépend de nouveau de trois paramètres : charge du processeur, charge de la mémoire et priorité.

La détermination de la charge composite moyenne peut être obtenue à partir de la relation suivante :

$$\overrightarrow{ACL} = \frac{\sum\limits_{i=1\,\text{à}\,p}\overrightarrow{CL_i}}{p} \qquad (3)$$

relation dans laquelle est la charge composite du *i*[ème] ensemble de file d'attente et *p* le nombre total d'ensembles de file d'attente.

Le déséquilibre moyen peut être déterminé à partir de la relation suivante :

$$\overrightarrow{AD_i} = \frac{\overrightarrow{AD_i} + \left(\overrightarrow{CL_i} - \overrightarrow{ACL_i}\right)}{2} \qquad (4)$$

La détermination du coût associé à une opération de migration peut être obtenue en considérant que le coût principal est dû à la migration de pages de mémoires, dans un environnement de type "UNIX" (ou à l'accès à des pages éloignées) et au coût lié au déplacement d'une tâche d'un ensemble de file d'attente à un autre.

Une approximation de l'estimation du coût est obtenue directement par le nombre de pages associées au processus et par le nombre de tâches devant être déplacées. Dans un environnement autre que l'environnement "UNIX", l'entité "page de mémoire" doit être remplacé par une entité équivalente.

Ces modes de détermination des paramètres impliqués ne sont précisés qu'à titre d'exemple, pour fixer les idées. D'autres alternatives existent et sont à la portée de l'homme de métier.

Si on se reporte de nouveau à la figure 8, la courbe $C_C$ illustre schématiquement l'allure de l'amélioration des performances par rapport à l'art connu (courbe $C$).

Cependant, l'expérience montre que, dans le cas général, l'amélioration obtenue par rapport à celle obtenue par la deuxième variante est peu importante. Ceci est dû essentiellement au fait que le déplacement physique des tâches entre files d'attente implique un coût non négligeable, ce même si celui-ci n'est pas généralisé, conformément aux dispositions préférentielles qui viennent d'être rappelées, mais au contraire sélectif. On réservera cette variante du procédé selon l'invention à une architecture de type "NUMA", car dans le cas d'une architecture classique de type "SMP", l'amélioration des performances n'est pas significative, alors que sa mise en oeuvre nécessite des modifications du système d'exploitation et la présence d'organes supplémentaires, matériel ou logique (figure 7 : 8).

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 2 et 4 à 8.

En particulier, les valeurs numériques, par exemple le nombre de files d'attente, n'ont été précisées que pour mieux fixer les idées. Elles dépendent essentiellement de l'application précise visée.

De même, les modes précis de détermination et de calcul des différents paramètres évoqués dans la description peuvent être adaptés, sans sortir du cadre de l'invention.

Enfin, bien que le procédé ait été décrit de façon détaillée dans le cadre d'un environnement "UNIX" et d'une architecture de type "NUMA", le procédé selon l'invention, comme il a été précédemment indiqué, n'est en aucun cas limité à ces applications particulières.

L'invention peut trouver application pour d'autres types d'architectures multiprocesseurs, dont le système d'exploitation est du type préemptif.

## Revendications

1. Procédé d'affectation de tâches dans un système de traitement de données numériques multiprocesseur, à système d'exploitation préemptif, comprenant un nombre déterminé de processeurs susceptibles de traiter lesdites tâches en parallèle, au moins une phase préliminaire pendant laquelle lesdits processeurs (20a-21a, 20b-22b, 20c) sont répartis en groupes (Ga, Gb, Gc), chaque groupe comprenant des nombres prédéterminés de processeurs, **caractérisé en ce qu'**il est associé à chacun desdits groupes de processeurs une file d'attente élémentaire (5a, 5b, 5c), à laquelle est associé un nombre prédéterminé de tâches à traiter selon un ordre de priorité déterminé et **en ce que** chacune des tâches est associée à l'un des processeurs associé à cette file d'attente élémentaire (5a, 5b, 5c).

2. Procédé selon la revendication 1, **caractérisé en ce que** lesdits groupes comprennent chacun un nombre identique de processeurs (200-203, 210-213).

3. Procédé selon les revendications 1 ou 2, **caractérisé en ce qu'**il comprend une phase préliminaire supplémentaire consistant en l'élaboration d'une série de tests et de mesures pour déterminer le nombre de processeurs de chaque groupe et le nombre de groupes.

4. Procédé selon l'une quelconque des revendications 1 à 3, **caractérisé en ce que**, l'architecture dudit système étant d'un type à accès de mémoire non uniforme, dit "NUMA", et le système (1) étant constitué d'un nombre prédéterminé de modules (M0, M1) reliés entre eux, comprenant chacun un nombre déterminé de processeurs (200-203, 210-213) et des moyens de mémorisation, chacun de ces dits modules (M0, M1) constitue l'un desdits groupes, chaque module étant associé à une desdites files d'attente élémentaires.

5. Procédé selon l'une quelconque des revendications 1 à 4, **caractérisé en ce que** chacun desdits processeurs est associé à une première structure de données qui l'identifie, **en ce que** ladite première structure de données comprend au moins un premier jeu de pointeurs ($p_{200}$ à p203) l'associant à l'une desdites files d'attente élémentaire (5a, 5b), **en ce que** chacune desdites files d'attente élémentaires (5a, 5b) est associée à une deuxième structure de données, **en ce que** ladite deuxième structure de données comprend au moins un deuxième jeu de pointeurs (pp5a, pp5b) l'associant à l'un desdits groupes de processeurs (200-201, 202-203), **en ce que** toutes les tâches à traiter ($T_1$ à T10) dans ledit système (1) étant enregistrées dans une table (4), chacune desdites deuxième structure de données des files d'attente élémentaires (5a, 5b) comprend en outre un troisième jeu de pointeurs (pT1, pT5, pT10) associant chacune des files d'attente élémentaires (5a, 5b) à l'une desdites tâches (T1 à T10) enregistrées dans la table (4) ou à une série de tâches enchaînées, et **en ce que** chacune desdites tâches (T1 à T10) de la table (4) est associée à une troisième structure de données qui comprend un quatrième jeu de pointeurs (p5a1 à p5a4, p5b1 à p 5b10) l'associant à l'une desdites files d'attente élémentaires (5a, 5b).

**6.** Procédé selon l'une quelconque des revendications 1 à 5, **caractérisé en ce qu'**il comprend au moins une phase supplémentaire consistant à répartir lesdites tâches entre lesdites files d'attente élémentaires (5a, 5b) en recherchant, lors de la création d'une nouvelle tâche à traiter (Tz), la file d'attente élémentaire la moins chargée ($5_y$) parmi toutes lesdites files d'attente élémentaires (5a, 5x, 5y, 5p) dudit système (1) et à aiguiller ladite nouvelle tâche vers cette file d'attente élémentaire, de manière à équilibrer la charge globale de ce système (1) entre lesdites files d'attentes élémentaires (5a, 5x, 5y, 5p).

**7.** Procédé selon la revendication 6, **caractérisé en ce que** ladite répartition est effectuer en déterminant un paramètre de charge dit composite associé à chacune desdites files d'attente élémentaires (5a, 5x, 5y, 5p), **en ce que**, chaque processeur (2a, 2x, 2y, 2p) étant associé à des moyens de mémoire (Mema, Memx, Memy, Memp), ce dit paramètre de charge composite est calculé comme étant la somme de la charge d'un processeur ou d'un groupe de processeurs associé à ladite file d'attente élémentaire et la charge des moyens de mémoire associés à ce processeur ou ce groupe de processeurs.

**8.** Procédé selon la revendication 6, **caractérisé en ce qu'**il comprend une étape préalable consistant à tester si ladite nouvelle tâche (Tz) est liée à une desdites files d'attente élémentaires (5a, 5x, 5y, 5p) et **en ce que** lorsque ledit test est positif à aiguiller ladite nouvelle tâche vers cette file d'attente élémentaire.

**9.** Procédé selon l'une quelconque des revendications 1 à 5, **caractérisé en ce qu'**il comprend au moins une phase supplémentaire consistant, lorsque l'une desdites files d'attente élémentaires ($5_q$) associée à l'un desdits groupes de processeurs ($2_q$) est vide de tâches exécutables, à rechercher une file d'attente élémentaire ($5_y$), dite éloignée, non vide et dans cette file d'attente élémentaire ($5_y$) à sélectionner une tâche exécutable par l'un desdits processeurs ($2_q$) dudit groupe de processeurs associé à la file d'attente élémentaire vide ($5_q$) et à la transmettre à ce processeur ($2_q$) pour y être traitée, de manière à équilibre globalement le traitement desdites tâches dans ledit système (1).

**10.** Procédé selon la revendication 9, **caractérisé en ce que** ladite file d'attente élémentaire non vide ($5_y$) doit présenter un seuil d'occupation minimal prédéterminé.

**11.** Procédé selon la revendication 10, **caractérisé en ce qu'**en outre, les tâches étant enregistrées par ordre de priorité décroissante, un nombre prédéterminé de tâches est sauté avant de balayer les autres tâches de ladite file d'attente élémentaire non vide ($5_y$) pour rechercher une tâche exécutable et la faire traiter par l'un desdits processeurs (2q) dudit groupe de processeurs associé à la file d'attente élémentaire vide (5q).

**12.** Procédé selon la revendication 11, **caractérisé en ce que** ledit nombre de tâches sautées et le nombre maximum de tâches balayées parmi toutes celles enregistrées dans ladite file d'attente élémentaire non vide ($5_q$) sont variables dans le temps et sont déterminés par un processus auto-adaptatif à partir du nombre de tâches trouvées ou non pendant lesdits balayages et de la place de ces tâches classées par ordre de priorité dans ladite file élémentaire non vide (5q).

**13.** Procédé selon l'une quelconque des revendications 9 à 12, **caractérisé en ce que** ladite tâche sélectionnée est celle associée à une valeur minimale d'un paramètre dit de coût, mesurant la dégradation de performances globale dudit système (1), due au traitement de ladite tâche sélectionnée dans ladite file d'attente élémentaire éloignée non vide ($5_q$) par l'un desdits processeurs dudit groupe de processeurs associé à la file d'attente élémentaire vide (2q).

**14.** Procédé selon l'une quelconque des revendications 1 à 5, **caractérisé en ce qu'**il comprend au moins une phase supplémentaire comprenant au moins une étape de mesure périodique d'une répartition équilibrée desdites tâches dans lesdites files d'attente élémentaires (5a, 5x, 5y, 5p) et, lors de la détermination d'un état déséquilibré dudit système (1), une étape de déplacement sélectif de tâches d'au moins une file d'attente élémentaire plus chargée ($5_x$) vers une file d'attente élémentaire moins chargée ($5_y$).

**15.** Procédé selon la revendication 14, **caractérisé en ce que**, lorsque ledit déséquilibre est inférieur à un seuil déterminé, aucun déplacement de tâche n'est réalisé.

**16.** Procédé selon les revendications 14 ou 15, **caractérisé en ce que** tout ou partie desdites tâches appartenant à des processus multitâches, chaque processus multitâche nécessitant une taille de mémoire et une charge de travail déterminées, il comprend une étape de mesure desdites charges de travail et desdites tailles de mémoire, **en ce qu'**il comprend la sélection du processus nécessitant la plus forte charge de travail et la plus faible taille de mémoire, et **en ce que** ce que toutes les tâches dudit processus sélectionné sont déplacées vers la file d'attente élémentaire la moins chargée ($5_y$).

**17.** Procédé selon la revendication 16, **caractérisé en ce qu'**il comprend une étape préliminaire consistant à tester si toutes les tâches dudit processus multitâche devant être déplacées appartiennent à l'ensemble de file d'attente élémentaire le plus chargé ($5_x$) et si aucune tâche n'est liée à l'un desdits groupes.

**18.** Procédé selon l'une quelconque des revendications 1 à 17, **caractérisé en ce que** ledit système d'exploitation est du type "UNIX" (marque déposée).

**19.** Système de traitement de données numériques multiprocesseur comprenant un nombre déterminé de processeurs pour la mise en oeuvre du procédé d'affectation de tâches à traiter aux dits processeurs selon l'une quelconque des revendications 1 à 18, **caractérisée en ce que** lesdits processeurs (20a-21a, 20b -22b, 20c) sont répartis en groupes (Ga, Gb, Gc) et **en ce qu'**il est prévu une file d'attente élémentaire (5a, 5b, 5c) associée à chacun des groupes (Ga, Gb, Gc), chacune desdites files d'attente élémentaires (5a, 5b, 5c) enregistrant un nombre prédéterminé de tâches à traiter selon un ordre de priorité déterminé, de manière à ce que chacune des tâches de chacune desdites files d'attente élémentaires (5a, 5b, 5c) soit associée à l'un des processeurs de cette file d'attente élémentaire (20a-21a, 20b -22b, 20c).

**20.** Système selon la revendication 19, **caractérisée en ce qu'**elle comprend en outre des moyens (6) pour déterminer la charge desdites files d'attente élémentaires (5a, 5x, 5y, 5p) et pour aiguiller une nouvelle tâche créée dans ledit système vers la file d'attente élémentaire la moins chargée (5y).

**21.** Système selon la revendication 19, **caractérisée en ce qu'**elle comprend en outre, lorsque l'une (5q) desdites files élémentaires (5a, 5x, 5y, 5p) associée à un desdits processeurs (2q) est vide, des moyens (7) pour rechercher une file élémentaire non vide (5y), dite éloignée, et dans cette file élémentaire (5y) une tâche exécutable et de l'affecter au dit processeur (2q) pour traitement.

**22.** Système selon la revendication 19, **caractérisée en ce qu'**elle comprend en outre des moyens (8) pour détecter un déséquilibre entre files d'attente élémentaires (5a, 5x, 5y, 5p), lorsqu'un tel déséquilibre est détecté, pour déterminer la file d'attente élémentaire la moins chargée (5x) et la file d'attente élémentaire la plus chargée (5y), et pour déplacer des tâches de la file d'attente élémentaire la moins chargée (5x) vers la file d'attente élémentaire la plus chargée (5y).

**23.** Système selon l'une quelconque des revendications 19 à 22, **caractérisée en ce que**, étant d'un type à accès de mémoire non uniforme, dit "NUMA", composée de modules (M0, M1) reliés entre eux, comprenant chacun un nombre déterminé de processeurs (200-203, 210-213) et des moyens de mémorisation, chacun de ces dits modules (M0, M1) constitue l'un desdits groupes, chaque module (Mo, M1) étant associé à une desdites files d'attente élémentaires.

**Claims**

**1.** Task assignment method in a multiprocessor digital data processing system, with a pre-emptive operating system, comprising a given number of processors capable of processing said tasks in parallel, at least one preliminary phase during which said processors (20a-21 a, 20b-22b, 20c) are divided into groups (Ga, Gb, Gc), each group comprising predetermined numbers of processors, **characterised in that** each of said groups of processors is associated with an elementary queue (5a, 5b, 5c), associated with a predetermined number of tasks to be processed according to a given order of priorities and **in that** each of the tasks is associated with one of the processors associated with this elementary queue (5a, 5b, 5c).

**2.** Method according to Claim 1, **characterised in that** said groups each comprise an identical number of processors (200-203, 210-213).

**3.** Method according to Claims 1 or 2, **characterised in that** it comprises an additional preliminary phase consisting of the development of a series of tests and measurements for determining the number of processors in each group and the number of groups.

4.  Method according to any one of Claims 1 to 3, **characterised in that**, the architecture of said system being of a type with non-uniform memory access, known as "NUMA", and the system (1) being constituted by a predetermined number of modules (M0, M1) linked together, each comprising a given number of processors (200-203, 210-213) and storage means, each of these said modules (M0, M1) constitutes one of said groups, each module being associated with one of said elementary queues.

5.  Method according to any one of Claims 1 to 4, **characterised in that** each of said processors is associated with a first data structure that identifies it, **in that** said first data structure comprises at least one first set of pointers (p200 to p203) associating it with one of said elementary queues (5a, 5b), **in that** each of said elementary queues (5a, 5b) is associated with a second data structure, **in that** said second data structure comprises at least one second set of pointers (pp5a, pp5b) associating it with one of said groups of processors (200-201, 202-203), **in that** all the tasks to be processed (T1 to T10) in said system (1) being recorded in a table (4), each of said second data structures of the elementary queues (5a, 5b) further comprises a third set of pointers (pT1, pT5, pT10) associating each of the elementary queues (5a, 5b) with one of said tasks (T1 to T10) recorded in the table (4) or with a series of concatenated tasks, and **in that** each of said tasks (T1 with T10) in the table (4) is associated with a third data structure that comprises a fourth set of pointers (p5a1 to p5a4, p5b1 to p 5b10) associating it with one of said elementary queues (5a, 5b).

6.  Method according to any one of Claims 1 to 5, **characterised in that** it comprises at least one additional phase consisting in distributing said tasks between said elementary queues (5a, 5b) while searching, when a new task to be processed (Tz) is created, for the least full elementary queue (5y) of all said elementary queues (5a, 5x, 5y, 5p) of said system (1) and in routing said new task towards this elementary queue, so as to balance the total load of this system (1) between said elementary queues (5a, 5x, 5y, 5p).

7.  Method according to Claim 6, **characterised in that** said distribution is carried out by determining a "composite" load parameter associated with each of said elementary queues (5a, 5x, 5y, 5p), **in that**, each processor (2a, 2x, 2y, 2p) being associated with storage means (Mema, Memx, Memy, Memp), said composite load parameter is calculated as being the sum of the load of a processor or a group of processors associated with said elementary queue and the load of the storage means associated with that processor or that group of processors.

8.  Method according to Claim 6, **characterised in that** it comprises a preliminary step consisting in testing whether said new task (Tz) is related to one of said elementary queues (5a, 5x, 5y, 5p) and **in that**, when said test is positive, routing said new task towards this elementary queue.

9.  Method according to any one of Claims 1 to 5, **characterised in that** it comprises at least one additional phase consisting, when one of said elementary queues (5q) associated with one of said groups of processors (2q) is empty of executable tasks, in searching for an elementary queue (5y), described as remote, not empty and in this elementary queue (5y), in selecting a task executable by one of said processors (2q) of said group of processors associated with the empty elementary queue (5q) and in transmitting it to that processor (2q) to be processed there, so as to balance out overall the processing of said tasks in said system (1).

10. Method according to Claim 9, **characterised in that** said non-empty elementary queue (5y) must have a predetermined minimum occupancy threshold.

11. Method according to Claim 10, **characterised in that**, in addition, the tasks being recorded in decreasing order of priority, a predetermined number of tasks is skipped before scanning the other tasks in said non-empty elementary queue (5y) in order to find an executable task and to have it processed by one of said processors (2q) of said group of processors associated with the empty elementary queue (5q).

12. Method according to Claim 11, **characterised in that** said number of skipped tasks and the maximum number of scanned tasks among all those recorded in said non-empty elementary queue (5q) are variable over time and are determined by a self-adapting process based on the number of tasks found or not during said scanning and on the place of these tasks, classified by order of priority, in said non-empty elementary file (5q).

13. Method according to any one of Claims 9 to 12, **characterised in that** said selected task is the one associated with a minimum value of a "cost" parameter, measuring the overall degradation of performance of said system (1), owing to the processing of said task selected from said non-empty, remote elementary queue (5q) by one of said processors of said group of processors associated with the empty elementary queue (2q).

14. Method according to any one of Claims 1 to 5, **characterised in that** it comprises at least one additional phase comprising at least one step of periodic measurement of a balanced distribution of said tasks in said elementary queues (5a, 5x, 5y, 5p) and, if an unbalanced state of said system (1) is determined, a step of selective moving of tasks from at least one fuller elementary queue (5x) towards a less full elementary queue (5y).

15. Method according to Claim 14, **characterised in that**, when said imbalance is below a given threshold, no tasks are moved.

16. Method according to Claims 14 or 15, **characterised in that** since all or some of said tasks belong to multi-task processes, each multi-task process requiring a given workload and memory size, it comprises a step of measuring said workloads and said memory sizes, **in that** it comprises the selection of the process requiring the heaviest workload and the smallest memory size, and **in that** all the tasks in said selected process are moved towards the least full elementary queue (5y).

17. Method according to Claim 16, **characterised in that** it comprises a preliminary step consisting in testing whether all the tasks of said multi-task process that have to be moved belong to the fullest elementary queue set (5x) and whether no task is linked to one of said groups.

18. Method according to any one of Claims 1 to 17, **characterised in that** said operating system is of the "UNIX" (trade mark) type.

19. Multiprocessor digital data processing system comprising a given number of processors for implementing the process of assigning tasks to be processed to said processors according to any one of Claims 1 to 18, **characterised in that** said processors (20a-21 a, 20b-22b, 20c) are divided into groups (Ga, Gb, Gc) and **in that** an elementary queue (5a, 5b, 5c) is provided, associated with each group (Ga, Gb, Gc), each of said elementary queues (5a, 5b, 5c) recording a predetermined number of tasks to be processed according to a given order of priorities, so that each of the tasks of each of said elementary queues (5a, 5b, 5c) is associated with one of the processors in this elementary queue (20a-21 a, 20b-22b, 20c).

20. System according to Claim 19, **characterised in that** it further comprises means (6) for determining the load in said elementary queues (5a, 5x, 5y, 5p) and for routing a new task created in said system to the least full elementary queue (5y).

21. System according to Claim 19, **characterised in that**, when one (5q) of said elementary files (5a, 5x, 5y, 5p) associated with one of said processors (2q) is empty, it further comprises means (7) for searching for a non-empty elementary queue (5y), described as remote, and in this elementary file (5y) an executable task, and to assign it to said processor (2q) for processing.

22. System according to Claim 19, **characterised in that** it further comprises means (8) for detecting an imbalance between elementary queues (5a, 5x, 5y, 5p), when such an imbalance is detected, for determining the least full elementary queue (5x) and the fullest elementary queue (5y), and for moving tasks from the least full elementary queue (5x) to the fullest elementary queue (5y).

23. System according to any one of Claims 19 to 22, **characterised in that**, being of a type with non-uniform memory access, known as "NUMA", made up of modules (M0, M1) linked together, each comprising a given number of processors (200-203, 210-213) and storage means, each of these said modules (M0, M1) constitutes one of said groups, each module (Mo, M1) being associated with one of said elementary queues.

**Patentansprüche**

1. Verfahren zum Zuordnen von Aufgaben in einem digitalen Multiprozessor-Datenverarbeitungssystem mit preemptivem Betriebssystem, das eine bestimmte Anzahl Prozessoren umfasst, die die Aufgaben parallel verarbeiten können, wobei diese Prozessoren (20a-21a, 20b-22b, 20c) wenigstens in einer Vorbereitungsphase in Gruppen

**EP 1 043 658 B1**

(Ga, Gb, Gc) verteilt sind, wobei jede Gruppe jeweils eine vorgegebene Anzahl von Prozessoren enthält, **dadurch gekennzeichnet, dass** jeder dieser Gruppen von Prozessoren eine Elementarwarteschlange (5a, 5b, 5c) zugeordnet ist, der eine vorgegebene Anzahl von Aufgaben zugeordnet ist, die in einer bestimmten Prioritätsreihenfolge verarbeitet werden sollen, und dass jede dieser Aufgaben einem der Prozessoren zugeordnet ist, der dieser Elementarwarteschlange (5a, 5b, 5c) zugeordnet ist.

2. Verfahren nach Anspruch 1, **dadurch gekennzeichnet, dass** die Gruppen jeweils die gleiche Anzahl von Prozessoren (200-203, 210-213) enthalten.

3. Verfahren nach den Ansprüchen 1 oder 2, **dadurch gekennzeichnet, dass** es eine zusätzliche Vorbereitungsphase umfasst, die darin besteht, eine Reihe von Tests und Messungen zu erarbeiten, um die Anzahl von Prozessoren jeder Gruppe und die Anzahl von Gruppen zu bestimmen.

4. Verfahren nach einem der Ansprüche 1 bis 3 **dadurch gekennzeichnet, dass** dann, wenn die Architektur des Systems von einem Typ mit nicht gleichmäßigem Speicherzugriff, "NUMA" genannt, ist und das System (1) aus einer vorgegebenen Anzahl von miteinander verbundenen Modulen (M0, M1) gebildet ist, die jeweils eine bestimmte Anzahl von Prozessoren (200-203, 210-213) und Speichermittel enthalten, jedes dieser Module (M0, M1) eine der Gruppen bildet, wobei jedes Modul einer der Elementarwarteschlangen zugeordnet ist.

5. Verfahren nach einem der Ansprüche 1 bis 4, **dadurch gekennzeichnet, dass** jeder der Prozessoren einer primären Datenstruktur zugeordnet ist, die ihn identifiziert, dass die primäre Datenstruktur wenigstens einen Satz Zeiger (p200 bis p203) umfasst, der sie einer der Elementarwarteschlangen (5a, 5b) zuordnet, dass jede dieser Elementarwarteschlangen (5a, 5b) einer zweiten Datenstruktur zugeordnet ist, dass die zweite Datenstruktur wenigstens einen zweiten Satz Zeiger (pp5a, pp5b) umfasst, der sie einer der Gruppen von Prozessoren (200-201, 202-203) zuordnet, dass dann, wenn alle in dem System (1) zu verarbeitenden Aufgaben (T1 bis T10) in eine Tabelle (4) eingetragen sind, jede zweite Datenstruktur der Elementarwarteschlangen (5a, 5b) außerdem einen dritten Satz Zeiger (pT1, pT5, pT10) umfasst, der jede der Elementarwarteschlangen (5a, 5b) einer der Aufgaben (T1 bis T10), die in die Tabelle (4) eingetragen sind, oder einer Reihe von miteinander verketteten Aufgaben zuordnet, und dass jede der Aufgaben (T1 bis T10) der Tabelle (4) einer dritten Datenstruktur zugeordnet ist, die einen vierten Satz Zeiger (p5a1 bis p5a4, p5b1 bis p5b10) umfasst, der sie einer der Elementarwarteschlangen (5a, 5b) zuordnet.

6. Verfahren nach einem der Ansprüche 1 bis 5, **dadurch gekennzeichnet, dass** es wenigstens eine zusätzliche Phase umfasst, die darin besteht, die Aufgaben auf die Elementarwarteschlangen (5a, 5b) zu verteilen, indem bei der Erzeugung einer neuen zu verarbeitenden Aufgabe (Tz) die am wenigsten belastete Elementarwarteschlange (5y) unter den Elementarwarteschlangen (5a, 5x, 5y, 5p) des Systems (1) gesucht wird, und die neue Aufgabe zu dieser Elementarwarteschlange zu leiten, derart, dass die globale Belastung dieses Systems (1) über die Elementarwarteschlangen (5a, 5x, 5y, 5p) hinweg ausgeglichen ist.

7. Verfahren nach Anspruch 6, **dadurch gekennzeichnet, dass** die Verteilung dadurch ausgeführt wird, dass ein so genannter Verbundbelastungsparameter bestimmt wird, der jeder der Elementarwarteschlangen (5a, 5x, 5y, 5p) zugeordnet ist, und dass dann, wenn jeder Prozessor (2a, 2x, 2y, 2p) einem der Speichermittel (Mema, Memx, Memy, Memp) zugeordnet ist, dieser Verbundbelastungsparameter als Summe aus der Belastung eines Prozessors oder einer Gruppe von Prozessoren, der bzw. die dieser Elementarwarteschlange zugeordnet ist, und aus der Belastung der Speichermittel, die diesem Prozessor oder dieser Gruppe von Prozessoren zugeordnet sind, berechnet wird.

8. Verfahren nach Anspruch 6, **dadurch gekennzeichnet, dass** es einen vorhergehenden Schritt umfasst, der darin besteht, zu prüfen, ob die neue Aufgabe (Tz) mit einer der Elementarwarteschlangen (5a, 5x, 5y, 5p) in Verbindung steht, und dass bei positivem Prüfungsergebnis diese neue Aufgabe zu dieser Elementarwarteschlange geleitet wird.

9. Verfahren nach einem der Ansprüche 1 bis 5, **dadurch gekennzeichnet, dass** es wenigstens eine zusätzliche Phase umfasst, die darin besteht, dann, wenn eine der Elementarwarteschlangen (5q), die einer der Gruppen von Prozessoren (2q) zugeordnet ist, keine ausführbaren Aufgaben enthält, eine so genannte entfernte, nicht leere Elementarwarteschlange (5y) zu suchen und in dieser Elementarwarteschlange (5y) eine Aufgabe auszuwählen, die von einem der Prozessoren (2q) der Gruppe von Prozessoren, die der leeren Elementarwarteschlange (5q) zugeordnet ist, ausgeführt werden kann, und sie zu diesem Prozessor (2q) zu schicken, damit sie hier verarbeitet wird, derart, dass die Verarbeitung der Aufgaben in dem System (1) global ausgeglichen ist.

**10.** Verfahren nach Anspruch 9, **dadurch gekennzeichnet, dass** die nicht leere Elementarwarteschlange (5y) eine vorgegebene minimale Belegungsschwelle aufweisen muss.

**11.** Verfahren nach Anspruch 10, **dadurch gekennzeichnet, dass** dann, wenn die Aufgaben in abnehmender Prioritätsreihenfolge aufgezeichnet sind, außerdem eine vorgegebene Anzahl von Aufgaben übersprungen wird, bevor die anderen Aufgaben der nicht leeren Elementarwarteschlange (5y) abgetastet werden, um eine ausführbare Aufgabe zu suchen und um sie durch einen der Prozessoren (2q) der Gruppe von Prozessoren, die der leeren Elementarwarteschlange (5q) zugeordnet ist, zu verarbeiten.

**12.** Verfahren nach Anspruch 11, **dadurch gekennzeichnet, dass** die Anzahl übersprungener Aufgaben und die maximale Anzahl abgetasteter Aufgaben unter all jenen, die in die nicht leere Elementarwarteschlange (5q) eingetragen sind, zeitlich veränderlich sind und durch einen selbstanpassenden Prozess ausgehend von der Anzahl von während dieser Abtastungen gefundenen oder nicht gefundenen Aufgaben und von dem Ort dieser Aufgaben, die in der nicht leeren Elementarwarteschlange (5q) durch die Prioritätsreihenfolge klassifiziert sind, bestimmt werden.

**13.** Verfahren nach einem der Ansprüche 9 bis 12, **dadurch gekennzeichnet, dass** die ausgewählte Aufgabe jene ist, die einem Minimalwert eines sogenannten Kostenparameters zugeordnet ist, der die Verschlechterung der globalen Leistung des Systems (1), die bedingt ist durch die Verarbeitung der in der nicht leeren, entfernten Elementarwarteschlange (5q) ausgewählten Aufgabe durch einen der Prozessoren der Gruppe von Prozessoren, die der leeren Elementarwarteschlange (2q) zugeordnet ist, misst.

**14.** Verfahren nach einem der Ansprüche 1 bis 5, **dadurch gekennzeichnet, dass** es wenigstens eine zusätzliche Phase umfasst, die wenigstens einen Schritt des periodischen Messens einer gleichmäßigen Verteilung der Aufgaben in den Elementarwarteschlangen (5a, 5x, 5y, 5p) und dann, wenn ein Ungleichgewichtszustand des Systems (1) festgestellt wird, einen Schritt des wahlweisen Verschiebens von Aufgaben von wenigstens einer stärker belasteten Elementarwarteschlange (5x) zu einer weniger stark belasteten Elementarwarteschlange (5y) umfasst.

**15.** Verfahren nach Anspruch 14, **dadurch gekennzeichnet, dass** dann, wenn das Ungleichgewicht kleiner als ein bestimmter Schwellenwert ist, keinerlei Verschiebung von Aufgaben ausgeführt wird.

**16.** Verfahren nach den Ansprüche 14 oder 15, **dadurch gekennzeichnet, dass** es dann, wenn alle Aufgaben oder ein Teil hiervon zu Multitasking-Prozessen gehören, wobei jeder Multitasking-Prozess eine bestimmte Speichergröße und eine bestimmte Arbeitsbelastung erfordert, einen Schritt des Messens der Arbeitsbelastungen und der Speichergrößen umfasst, dass es die Auswahl des Prozesses umfasst, der die höchste Arbeitsbelastung und die kleinste Speichergröße erfordert, und dass alle Aufgaben des ausgewählten Prozesses in die am wenigsten stark belastete Elementarwarteschlange (5y) verschoben werden.

**17.** Verfahren nach Anspruch 16, **dadurch gekennzeichnet, dass** es einen Vorbereitungsschritt umfasst, der darin besteht, zu prüfen, ob alle Aufgaben des Multitasking-Prozesses, die verschoben werden sollen, zu der am stärksten belasteten Gesamtheit von Elementarwarteschlangen (5x) gehören und ob keine Aufgabe mit einer der Gruppen in Verbindung steht.

**18.** Verfahren nach einem der Ansprüche 1 bis 17, **dadurch gekennzeichnet, dass** das Betriebssystem vom Typ "UNIX" (eingetragenes Warenzeichen) ist.

**19.** Digitales Multiprozessor-Datenverarbeitungssystem, das eine bestimmte Anzahl von Prozessoren für die Ausführung des Verfahrens zum Zuordnen von zu verarbeitenden Aufgaben zu diesen Prozessoren nach einem der Ansprüche 1 bis 18 umfasst, **dadurch gekennzeichnet, dass** die Prozessoren (20a-21a, 20b-22b, 20c) in Gruppen (Ga, Gb, Gc) verteilt sind und dass Elementarwarteschlangen (5a, 5b, 5c), die jeder der Gruppen (Ga, Gb, Gc) zugeordnet sind, vorgesehen sind, wobei jede dieser Elementarwarteschlangen (5a, 5b, 5c) eine vorgegebene Anzahl von Aufgaben, die in einer bestimmten Prioritätsreihenfolge zu verarbeiten sind, enthält, derart, dass jede der Aufgaben jeder der Elementarwarteschlangen (5a, 5b, 5c) einem der Prozessoren der jeweiligen Elementarwarteschlange (20a-21 a, 20b-22b, 20c) zugeordnet ist.

**20.** System nach Anspruch 19, **dadurch gekennzeichnet, dass** es außerdem Mittel (6) umfasst, um die Belastung der Elementarwarteschlangen (5a, 5x, 5y, 5p) zu bestimmen und um eine neue Aufgabe, die in dem System erzeugt wird, zu der am wenigstens stark belasteten Elementarwarteschlange (5y) zu leiten.

**21.** System nach Anspruch 19, **dadurch gekennzeichnet, dass** es außerdem dann, wenn eine (5q) der Elementarwarteschlangen (5a, 5x, 5y, 5p), die einem der Prozessoren (2q) zugeordnet ist, leer ist, Mittel (7) umfasst, um eine sogenannte entfernte, nicht leere Elementarwarteschlange (5y) und in dieser Elementarwarteschlange (5y) eine ausführbare Aufgabe zu suchen und sie diesem Prozessor (2q) für die Verarbeitung zuzuweisen.

**22.** System nach Anspruch 19, **dadurch gekennzeichnet, dass** es außerdem Mittel (8) umfasst, um ein Ungleichgewicht zwischen den Elementarwarteschlangen (5a, 5x, 5y, 5p) zu erfassen, um dann, wenn ein solches Ungleichgewicht erfasst wird, die am wenigsten stark belastete Elementarwarteschlange (5x) und die am stärksten belastete Elementarwarteschlange (5y) zu bestimmen und um die Aufgaben der am wenigsten stark belasteten Elementarwarteschlange (5x) in die am stärksten belastete Elementarwarteschlange (5y) zu verschieben.

**23.** System nach einem der Ansprüche 19 bis 22, **dadurch gekennzeichnet, dass** dann, wenn es von einem Typ mit nicht gleichmäßigem Speicherzugriff, "NUMA" genannt, ist und aus Modulen (M0, M1) aufgebaut ist, die miteinander verbunden sind und jeweils eine bestimmte Anzahl Prozessoren (200-203, 210-213) und Speichermittel enthalten, jedes dieser Module (M0, M1) eine der Gruppen bildet, wobei jedes Modul (M0, M1) einer der Elementarwarteschlangen zugeordnet ist.

FIG.1

FIG.2

FIG.3

FIG.4

Nouvelle
tâche

Liée à une
file d'attente
?

OUI

NON

Affectation
à cette file
d'attente

Recherche de la
file d'attente la
moins chargée

Affectation
à cette file
d'attente

FIG.5A

2

| Mema | Memx | Memy | Memp |

| 2a | 2x | 2y | 2p |

| 5a | 5x | 5y | 5p |

K

H

1

FIG.5B

6

TZ

FIG.6A

FIG.6B

FIG.7

FIG.8

Nombre de scripts par heure

C'A

CA

CB

CC

C

Nombre d'utilisateurs